# EUROPEAN PATENT SPECIFICATION

(11) **EP 4 028 852 B1**
(45) Date of publication and mention of the grant of the patent: **12.02.2025**
(21) Application number: 20862297.7
(22) Date of filing: 17.08.2020
(51) Int. Cl.: G06F 13/38, G06F 13/40, G06F 13/42, G06F 1/00, G06F 1/16, G06G 1/16, G06F 1/26, H05K 13/00, H04L 12/10, H04L 12/40, F16M 11/04, F16M 11/10, F16M 11/20, F16M 13/02, H04B 1/3877

(54) **SYSTEMS AND METHODS FOR DOCKING STATIONS REMOVABLY ATTACHABLE TO DISPLAY APPARATUSES**
SYSTEME UND VERFAHREN FÜR ABNEHMBAR AN ANZEIGEVORRICHTUNGEN BEFESTIGBARE ANDOCKSTATIONEN
SYSTÈMES ET PROCÉDÉS DESTINÉS À DES STATIONS D'ACCUEIL POUVANT ÊTRE FIXÉES AMOVIBLES À DES APPAREILS D'AFFICHAGE

(30) Priority: 09.09.2019 US 201962897772 P; 07.10.2019 US 201962911756 P; 27.03.2020 US 202016833089
(43) Date of publication of application: 20.07.2022
(73) Proprietor: Targus International LLC, Anaheim CA 92806 (US)
(72) Inventor: DECAMP, Ronald, Long Beach, California 90808 (US); TSANG, Man Cheung Dan, Calrsbad, California 92010 (US); MARKOVSKY, Nicholas Anthony, Yorba Linda, California 92886 (US)
(74) Representative: Murgitroyd & Company
(86) International application number: PCT/US2020/046703
(87) International publication number: WO 2021/050215

(56) References cited:
- WO-A1-2011/040904
- US-A1- 2007 168 593
- US-A1- 2012 120 581
- US-A1- 2013 010 418
- US-A1- 2014 361 995
- US-A1- 2018 074 546
- US-B1- 10 108 221
- US-B2- 7 471 511
- US-B2- 9 612 628

## Description

### Technical Field

This invention relates to a docking station to removably attach to a docking station receptacle of a display apparatus.

### Background

Electronic devices may connect to one or more display apparatuses in order for data present on or generated by such electronic device to be visually displayed on the display apparatus. Electronic devices may (additionally, or alternatively) connect to external objects in order to receive input from or provide output to such devices. Electronic devices, their connected display apparatus(es), and any other connected objects or devices may each require power in order to operate.

WO 2011/040904 A1 describes a docking device mounting system. The system can include a display device having a plurality of mounting features disposed thereupon; a docking device including a plurality of universal serial bus ("USB") interfaces, at least one power interface, and at least one video interface; and at least one mounting member having at least one mounting feature and at least one attachment feature disposed thereupon. Each of the at least one mounting member mounting features correspond to each of the plurality of display device mounting features and the at least one attachment feature permits the detachable attachment of the docking device to the display device.

US 2007/168593 A1 describes a mobile information handling system docking apparatus that includes a base including a display device. An information handling system docking connector is located on the base. A mobile information handling system may be secured to the base and connected to the information handling system docking connector in order to utilize the mobile information handling system as a conventional desktop information handling system while reducing the space and cables required by conventional mobile information handling system docking stations.

US 2014/361995 A1 describes a computing device expansion system. According to one implementation, a docking receptacle is coupled to a touch-enabled monitor computing device and is also configured to receive and connect to a portable electronic device. Furthermore, when the portable electronic device is attached to the docking receptacle, a display area of the portable electronic device is cloned on the monitor computing device such that touch input on either the portable electronic device or monitor computing device is replicated on the monitor computing device or portable electronic device.

US 2018/074546 A1 describes a hybrid docking station that determines whether native video data exists and can be passed through to a video port or whether a virtual video processor should be activated to provide virtual video data to a video port. For example, a laptop is connected to a hybrid docking station using a USB^{™} 3.0 connection. The hybrid docking station recognizes that the USB^{™} 3.0 connection includes a native video data and passes the native video data to a DisplayPort^{™}. By avoiding activating a virtualized video processor and using native video data, the laptop avoids installing software to communicate with the virtualized video processor and communicates with one or more displays using a native video channel. By avoiding installing software, it simplifies IT's and user's usage and experience with universal docking station.

### Summary

The invention is defined in the claims.

### Brief Description of the Drawings

Non-limiting and non-exhaustive embodiments of the disclosure are described, including various embodiments of the disclosure with reference to the figures, in which:
FIGS. 1 A-1 B illustrate components of a system for docking with a host device, according to an embodiment.
FIGS. 2A-2B illustrate components of a system for docking with a host device, according to an embodiment.
FIGS. 3A-3C illustrate components of a system for docking with a host device, according to an embodiment.
FIG. 4 illustrates a docking station with a wireless transceiver that is removable from a body of the docking station, according to an embodiment.
FIG. 5 illustrates components of a system for docking with a host device, according to an embodiment.
FIG. 6 illustrates components of a system for docking with a host device, according to an embodiment.
FIG. 7 illustrates components of a system for docking with a host device, according to an embodiment.
FIG. 8 is a block diagram of a system for docking with a host device, according to an embodiment.
FIG. 9 is a block diagram of a system for docking with a host device, according to an embodiment.
FIG. 10 is a block diagram of a system for docking with a host device, according to an embodiment.
FIG. 11 illustrates a method of a docking station, according to an embodiment.
FIG. 12 illustrates a method of a docking station, according to an embodiment.
FIG. 13 illustrates a method of a display apparatus, according to an embodiment.
FIG. 14 illustrates a method of a display apparatus, according to an embodiment.

### Detailed Description of Preferred Embodiments

Electronic devices may be designed that connect to, and receive power and/or data signals from, external objects via one or more connectors. Many devices have a plurality of these connectors, which may include power connectors to connect power sources (e.g., a DC connector to connect to an AC/DC adapter or a C14 connector to connect to utility transformers via a wall outlet), communications connectors to connect communication devices (e.g., RJ-45 connectors to connect to routers or other networking equipment), and data connectors to connect output devices (e.g., stereo out connectors to connect to speakers; HDMI, DisplayPort, or VGA connectors to connect to display screens; etc.), and/or input devices (e.g., Universal Serial Bus (USB) or PS/2 connectors to connect to mice and/or keyboards, etc.) to an electronic device. Hybrid connectors (e.g., connectors that are capable of performing as more than one type of connector) are expressly contemplated. Persons skilled in the art will recognize that many of these (and other, including custom) connectors are understood to be one or the other of a complementary pair of possibilities for that connector type (e.g., a "male" version and a "female" version of the connector type). For the purposes of this disclosure, a "connector" may refer at times individually to either of the complementary pair for that connector type.

In some cases, one or more of these external objects may instead be connected to one or more connectors of an intermediary docking station rather than directly to the electronic device. The docking station may then connect to and electronically communicate with the electronic device (e.g., via a connector that is designed to interface with a connector on the electronic device). In this situation, the electronic device may be considered a "host" device (and any connector of the docking station connected to the host device may be considered a "host device connector").

The docking station may handle data and/or power to and/or from each external objects connected to the docking station to and/or to and/or from the connected host device. In this way, the ability to connect and/or remove the one or more external objects to and/or from the host device all at once may be greatly simplified via the simple removal and/or connection of the single host device connector of the docking station. In some embodiments, the docking station may instead (or additionally) connect to a host device by wirelessly interfacing a wireless transceiver of the host device and a wireless transceiver of the docking station. However, the act of connecting external objects with the connectors of a docking station (instead of directly with connectors on a host device) may not entirely solve the problem of clutter associated with, for example, cabling from the external object(s) to those connectors. If the docking station is not appropriately placed, this clutter may still take up room on, for example, a desk of the user of the host device and docking station, just as it might if these external objects instead were directly connected to connectors on the host device.

It may therefore also be beneficial to develop systems and methods for integrating a docking station into another device. For example, it may be beneficial to develop systems and methods for integrating a docking station into, for example, a display apparatus on the desk of the user. This integration may help remove the clutter associated with the docking station away from the surface of the desk (or other area) that the user may desire to be uncluttered. By integrating a docking station into a display apparatus, clutter may also be further reduced by communicating at least some power and/or data (e.g., power from the docking station to the display apparatus and/or video signals from the docking station to the display apparatus) via directly interfacing (without a separate cable) compatible connectors on the docking station and the display apparatus (rather than by running detachable power and/or video cables between the docking station and the display apparatus).

Further, because of the wide variety of possible host devices (e.g., laptop computers, smartphones, tablets, desktop computers, etc.), and because many of these host devices may only interface with certain types of host device connectors (each with, perhaps, its own associated circuitry) and/or may only be compatible with certain wireless protocols, it would also be beneficial to design the display apparatus in such a way that different docking stations (with different host device connectors, differing circuitry associated with those connectors, different supported wireless protocols and/or other various possible differences) may be interchanged into the display apparatus in order to match the requirements of the current device to be used with the system.

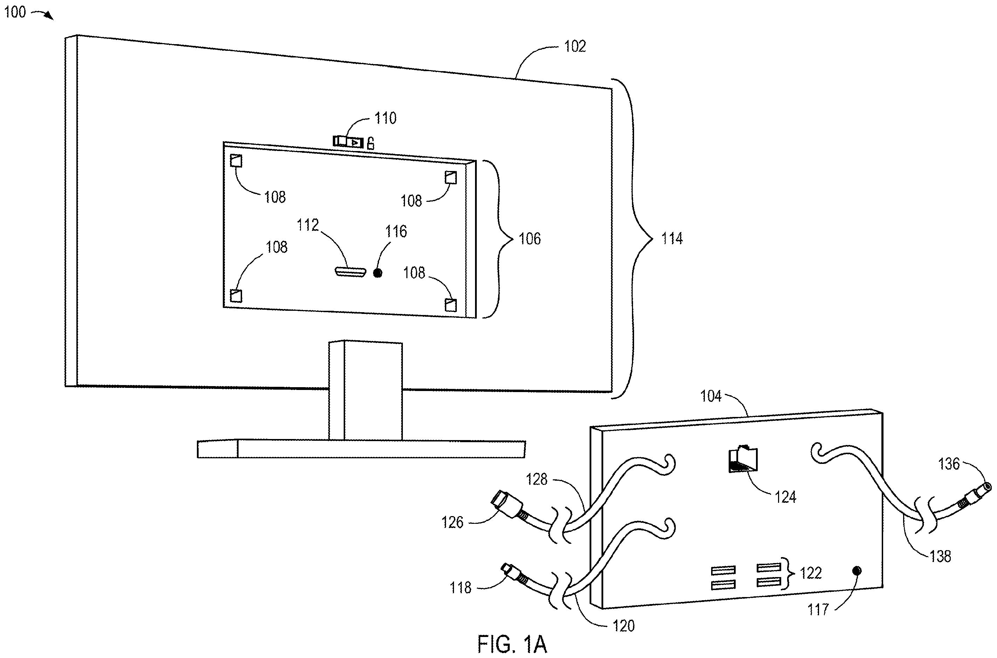

FIGS. 1A-1B illustrate components of a system 100 for docking with a host device, according to an embodiment. FIG. 1A illustrates a display apparatus 102 and a docking station 104.

The display apparatus 102 includes a docking station receptacle 106. The docking station receptacle 106 may be shaped to receive the docking station 104 when the docking station 104 is inserted into the back of the display apparatus 102. The docking station 104 may be one of many possible docking stations (with compatibility with many possible host devices) that are useable with the display apparatus 102.

The docking station receptacle 106 includes one or more attachment devices 108 that interact with attachment devices of the docking station 104 to removably attach the docking station 104 in place once the docking station 104 has been inserted into the docking station receptacle 106. Examples of possible attachment devices that may be used between the docking station 104 and the docking station receptacle 106 include magnet features, hook and catch features, slotted peg and catch features, or any other attachment device appropriate for securing the docking station 104 to the docking station receptacle 106. One, two, three, four, or any other number of these attachment devices may be used. In the embodiment of FIG. 1A, the attachment devices 108 are catch attachment devices appropriate to accept a slotted peg.

The display apparatus 102 may further include a docking station release mechanism 110. The docking station release mechanism 110 may release the docking station 104 from the docking station receptacle 106 by disengaging the attachment between the attachment devices 108 and any attachment devices of the docking station 104. For example, the docking station release mechanism 110 may disengage a magnetic connection between a magnet associated with an attachment device 108 and a piece of metal associated with an attachment device of the docking station 104. As another example, the docking station release mechanism 110 may disengage a catch associated with an attachment device 108 from, for example, a hook or a slotted peg associated with an attachment device of the docking station 104. The docking station release mechanism 110 may be, for example, a button or a slider. It is contemplated that in some embodiments, the docking station release mechanism 110 may be instead be included on the docking station 104.

The docking station receptacle 106 includes a direct data connector 112. The direct data connector 112 of the display apparatus 102 is configured to interface with a direct data connector of the docking station 104 directly (without the use of a cable). This interface allows the display apparatus 102 to receive and use graphical and/or other data from the docking station 104. For example, graphical data may be communicated to the docking station 104 by a host device connected to the docking station 104 and from there communicated via this interface to the display apparatus 102 and used to render a display on a display screen 114 of the display apparatus 102. This interface between the direct data connector 112 of the display apparatus 102 and the direct data connector 112 of the docking station 104 may also allow the display apparatus 102 to send data to the docking station 104. The direct data connector 112 may be, for example, a High-Definition Multimedia Interface (HDMI) connector, a Digital Visual Interface (DVI) connector, a USB (e.g., USB-C) connector, a Thunderbolt^{™} 3 connector, or any other connector (including custom and/or hybrid connectors) capable of communicating graphical and/or other data from and/or to the docking station 104 and the display apparatus 102.

The docking station receptacle 106 includes a direct power in connector 116. The direct power in connector 116 is configured to interface with a direct power out connector of the docking station 104 directly (without the use of a cable). This interface allows the docking station 104 to provide the display apparatus 102 with the power necessary to operate. The direct power in connector 116 may be, for example, a DC connector, a USB (e.g., USB-C) connector, or any other connector (including custom and/or hybrid connectors) capable of communicating power from the docking station 104 to the display apparatus 102.

It is further contemplated that the features of the direct data connector 112 and the direct power in connector 116 may, in some embodiments, be combined into a single connector that is capable of performing both the data and power communication features described (e.g., a USB-C connector, a Thunderbolt^{™} 3 connector, and/or a custom and/or hybrid connector made for this combined purpose).

The docking station 104 includes a host device connector 118. The host device connector 118 may interface with a connector of a host device that is being used with the docking station 104. Via this interface, the host device connector 118 electronically communicates data and power to and/or from the docking station 104 to and/or from the connected host device. The host device connector 118 may be, for example, a USB-C connector, a Thunderbolt^{™} 3 connector, or any other connector (including custom and/or hybrid connectors) that may be used to interface with a connector of the connected host device for this purpose.

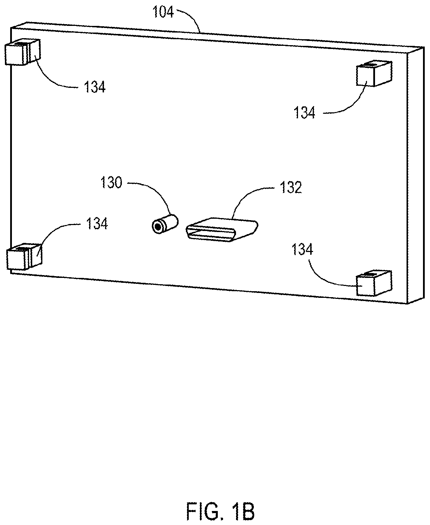

The docking station 104 includes a wireless transceiver (internal, not shown in FIG. 1). This wireless transceiver may communicate with a wireless transceiver of the host device that is being used with the docking station 104. This interface may communicate data (e.g., graphical or other data) to and/or from the docking station 104 to and/or from the connected host device. This interface may use, for example, a Wi-Fi^{™} protocol, a Bluetooth^{™} protocol, or any other appropriate wireless protocol useable to transfer data in this fashion.

This (or another) wireless transceiver is also used by the docking station 104 to connect to other wireless network devices (e.g., a network device such as a router) in order to receive independent data (e.g., data not from a host device) from a network. This data is used to operate the display apparatus 102 (e.g., used to power on and/or off the display apparatus 102, used to render a display on the display screen of 114 of the display apparatus 102 (such as, e.g., weather, news, or status of another device on the network)). This data may be, e.g., data received from an Internet of Things (IoT) system (such as, e.g., an IoT home automation system).

The docking station 104 may include one or more connectors (for example, connectors 117, 122-126, 136) for connecting the docking station 104 to one or more external objects. As discussed above, the docking station 104 may communicate data and/or power to and/or from each of these external objects to and/or from the host device connected to the docking station 104 via the host device connector 118 and/or the wireless transceiver of the docking station 104.

For example, the docking station 104 may include a power source connector 117. The power source connector 117 may be connected to an external power source such as, for example, a battery, a connection to a utility transformer that is provided in a structure, or any other appropriate external power source. The connection to an external power source via the power source connector 117 may provide the docking station 104 the necessary power to function. Further, the docking station 104 may need to provide power to each of the display apparatus 102, one or more secondary display apparatuses (not shown), a host device (not shown), and/or one or more external objects connected to the docking station 104. This power (as supplied from the docking station 104 to these other devices) may be necessary for these other devices to, for example, operate, charge their internal batteries, and/or pass along power to external objects. The power to be supplied to these other devices by the docking station 104 may be drawn by the docking station 104 from the external power source via the power source connector 117. The power source connector 117 may be, for example, a DC connector, a USB (e.g., USB-C) connector, an International Electrotechnical Commission (IEC) 420 C13 or C14 connector, or any other connector (including custom and/or hybrid connectors) capable of communicating power from an external power source to the docking station 104.

As another example, the docking station 104 may include USB connectors 122, which may be individually used by the docking station 104 as one of many possible connectors (e.g., power connectors, communications connectors, and/or data connectors). In some embodiments, one or more of the USB connectors 122 (or other data connectors) may be used to connect to input devices, such as mice and keyboards. Data from these input devices may travel through the docking station 104 to a connected host device via the **host device** connector 118 and/or the wireless transceiver of the docking station 104. In other embodiments, one or more of the USB connectors 122 (or other data connectors) may be used to connect output devices, such as speakers, secondary display screens, printers, or other output devices. Data to these output devices may travel from a connected host device through the docking station 104 via the host device connector 118 and/or the wireless transceiver of the docking station 104.

As another example, the docking station 104 may include an RJ-45 connector 124, which may be used by the docking station 104 as, for example, a communications connector. In some embodiments, communications data to and/or from a communications device (e.g., a router or other network device) connected to the RJ-45 connector 124 (or other communications connector) may travel through the docking station 104 to and/or from a connected host device via the host device connector 118 and/or the wireless transceiver of the docking station 104.

As another example, the docking station 104 includes an auxiliary graphical data connector 126, which may be, for example, an HDMI connector, a USB-C connector, or another data connector. In some embodiments, graphical data from a connected host device may travel from the host device via the host device connector 118 and/or the wireless transceiver of the docking station 104 through the docking station 104 to a secondary display apparatus (not shown) or another secondary display device that may be connected to the auxiliary graphical data connector 126. This graphical data may be used to render a display on a display screen of such secondary display apparatus or other secondary display device. In embodiments where a secondary display device is connected to an auxiliary graphical data connector 126 in this fashion, the communication of graphical data through the docking station 104 to the secondary display device may be instead of, or in addition to, the communication of graphical data to the direct data connector 112 of the display apparatus 102 previously described.

As another example, the docking station 104 may include an auxiliary power out connector 136, which may be used by the docking station 104 as, for example, a power connector for use with a secondary display apparatus (not shown). The auxiliary power out connector 136 may be, for example, a DC connector, a USB (e.g., USB-C) connector, an IEC 420 C13 or C14 connector, or any other connector (including custom and/or hybrid connectors) capable of communicating power from the docking station 104 to another device. In some embodiments, power from the docking station 104 may travel to a secondary display apparatus that is connected to the auxiliary power out connector 136. This power may be provided to the secondary display apparatus so that it may operate. This power may be sourced by the docking station 104 from the power source connector 117.

Various connectors of the docking station 104 (e.g., the host device connector 118, the auxiliary graphical data connector 126, and/or the auxiliary power out connector 136) may be placed at the end of cables (e.g., cables 120, 128, 138) integrated into the docking station 104 in order to facilitate simplicity in connecting the connector to its associated external object/host device. Other embodiments without such cables (e.g., where a fully detachable cable is separately provided to interface with the connector of the docking station 104 and a connector on the associated external object/host device, and/or where the associated external object/host device is connected directly to the docking station 104 via a connector integrated into the body of the docking station 104) are also contemplated.

FIG. 1B illustrates a back view of the docking station 104. The docking station 104 may include a direct power out connector 130. As described above, the direct power out connector 130 may interface with the direct power in connector 116 of the display apparatus 102 and may deliver power to the direct power in connector 116 to operate the display apparatus 102. The direct power out connector 130 may be, for example, a DC connector, a USB (e.g., USB-C) connector, or any other connector (including custom and/or hybrid connectors) capable of communicating power from the docking station 104 to the display apparatus 102.

The docking station 104 includes a direct data connector 132. As described above, the direct data connector 132 may interface with the direct data connector 112 of the display apparatus 102 to communicate graphical and/or other data from a host device connected to the docking station 104 to the display screen 114 of the display apparatus 102. The direct data connector 132 may be, for example, an HDMI connector, a DVI connector, a USB (e.g., USB-C) connector, a Thunderbolt^{™} 3 connector, or any other connector (including custom and/or hybrid connectors) capable of communicating graphical and/or other data from the docking station 104 for use with the display apparatus 102.

It is further contemplated that the features of the direct data connector 132 and the direct power out connector 130 may, in some embodiments, be combined into a single connector that is capable of performing both the data and power communication features described (e.g., a USB-C connector, a Thunderbolt^{™} 3 connector, and/or a custom and/or hybrid connector made for this combined purpose).

The docking station 104 includes one or more attachment devices 134. As described above, the attachment devices 134 may interact with the attachment devices 108 of the docking station 104 in order to removably attach the docking station 104 to the docking station receptacle 106. In the embodiment of FIG. 1B, the attachment devices 134 may be slotted peg features.

The docking station 104 may include the host device connector 118 (and associated circuitry) and/or the wireless protocol compatibilities necessary to connect with some types of host devices for the communication of data and/or power to and/or from that type of host device, while another docking station may include a different host device connector (and perhaps different associated circuitry) and/or different wireless protocol compatibilities to connect with other types of host devices for the communication of data and/or power to and/or from those types of host devices. It is anticipated that a user of the system 100 may be able to leverage the removably attachable nature of the docking stations herein described (e.g., the docking station 104) to switch between two or more such docking stations that are configured to work with the display apparatus 102 as needed, depending on current device (host or otherwise) compatibility requirements.

The docking station 104 may include one or more processors and/or controllers (not shown) having instructions thereon to implement one or more features of the docking station 104 as described herein. Similarly, the display apparatus 102 may include one or more processors and/or controllers (not shown) having instructions thereon to implement one or more features of the display apparatus 102 as described herein. Such instructions may be sourced from a non-transitory computer-readable medium (not shown) on or associated with these processors and/or controllers.

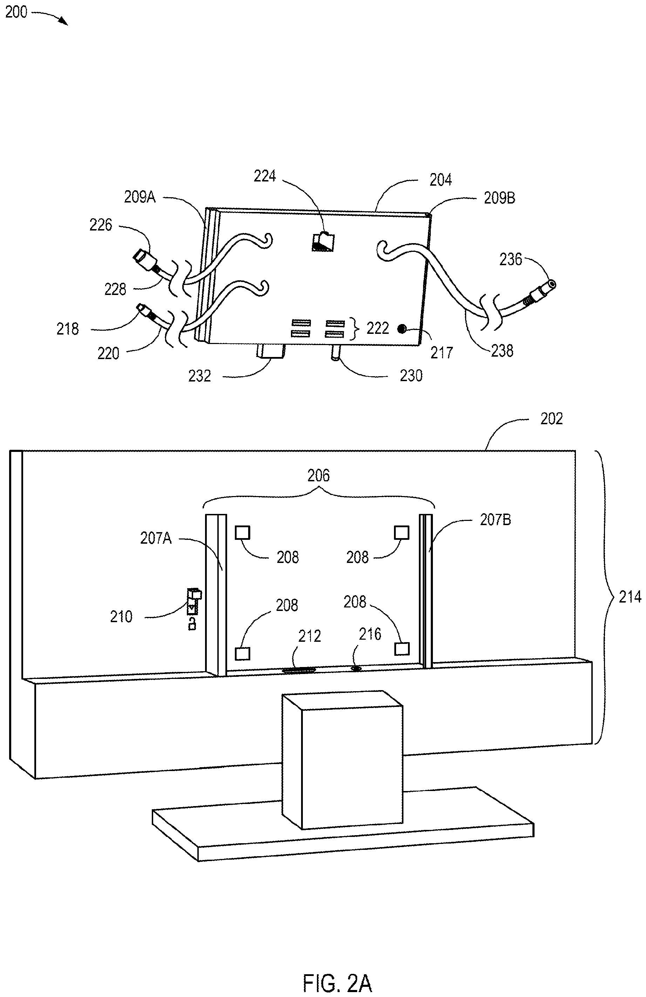

FIGS. 2A-2B illustrate components of a system 200 for docking with a host device, according to an embodiment. FIG. 2A illustrates a display apparatus 202 and a docking station 204.

The display apparatus 202 includes a docking station receptacle 206. The docking station receptacle 206 may include rails 207A and 207B to receive the docking station 204 when the docking station 204 is slid down the back of the display apparatus 202. The docking station 204 may be one of many possible docking stations (with compatibility with many possible host devices) that are useable with the display apparatus 202.

The docking station receptacle 206 may include one or more attachment devices 208 that may interact with attachment devices of the docking station 204 to removably attach the docking station 204 in place once the docking station 204 has been inserted into the docking station receptacle 206. Examples of possible attachment devices that may be used between the docking station 204 and the docking station receptacle 206 include magnet features, hook and catch features, slotted peg and catch features, or any other attachment device appropriate for securing the docking station 204 to the docking station receptacle 206. One, two, three, four, or any other number of these attachment devices may be used. In the embodiment of FIG. 2A, the attachment devices 208 may be magnet attachment devices.

The display apparatus 202 may further include a docking station release mechanism 210. The docking station release mechanism 210 may release the docking station 204 from the docking station receptacle 206 by disengaging the attachment between the attachment devices 208 and any attachment devices of the docking station 204. For example, the docking station release mechanism 210 may disengage a magnetic connection between a magnet associated with an attachment device 208 and a piece of metal associated with an attachment device of the docking station 204. As another example, the docking station release mechanism 210 may disengage a catch associated with an attachment device 208 from, for example, a hook or a slotted peg associated with an attachment device of the docking station 204. The docking station release mechanism 210 may be, for example, a button or a slider. It is contemplated that in some embodiments, the docking station release mechanism 210 may instead be included on the docking station 204.

The docking station receptacle 206 may include a direct data connector 212. The direct data connector 212 is configured to interface with a direct data connector 232 of the docking station 204 directly (without the use of a separate cable). This interface allows the display apparatus 202 to receive and use graphical and/or other data from the docking station 204. For example, graphical data may be communicated to the docking station 204 by a host device connected to the docking station 204 and from there communicated via this interface to the display apparatus 202 and used to render a display on a display screen 214 of the display apparatus 202. The interface between the direct data connector 212 and the direct data connector 232 of the docking station 204 may also allow the display apparatus 202 to send data to the docking station 204. The direct data connector 212 may be, for example, an HDMI connector, a DVI connector, a USB (e.g., USB-C) connector, a Thunderbolt^{™} 3 connector, or any other connector (including custom and/or hybrid connectors) capable of communicating graphical and/or other data from the docking station 204 for use with the display apparatus 202.

The docking station receptacle 206 may include a direct power in connector 216. The direct power in connector 216 is configured to interface with a direct power out connector 230 of the docking station 204 directly (without the use of a cable). This interface allows the docking station 204 to provide the display apparatus 202 with the power necessary to operate. The direct power in connector 216 may be, for example, a DC connector, a USB (e.g., USB-C) connector, or any other connector (including custom and/or hybrid connectors) capable of communicating power from the docking station 204 to the display apparatus 202.

It is further contemplated that the features of the direct data connector 212 and the direct power in connector 216 may, in some embodiments, be combined into a single connector that is capable of performing both the data and power communication features described (e.g., a USB-C connector, a Thunderbolt^{™} 3 connector, and/or a custom and/or hybrid connector made for this combined purpose).

The docking station 204 includes a host device connector 218. The host device connector 218 may interface with a connector of a host device that is being used with the docking station 204. Via this interface, the host device connector 218 electronically communicates data and power to and/or from the docking station 204 to and/or from the connected host device. The host device connector 218 may be, e.g., a USB-C connector, a Thunderbolt^{™} 3 connector, or any other connector (including custom and/or hybrid connectors) that may be used to interface with a connector of the connected host device for this purpose.

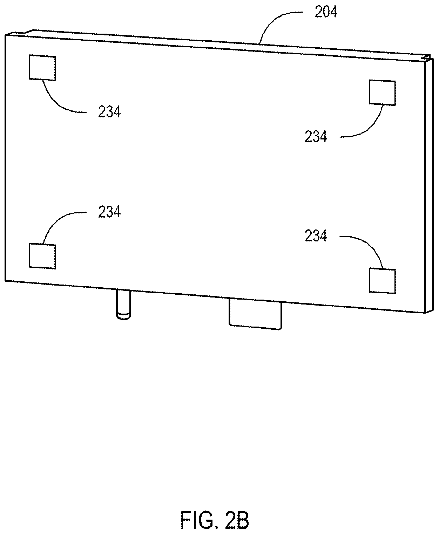

In some embodiments, the docking station 204 includes a wireless transceiver (internal, not shown in FIG. 2). This wireless transceiver may communicate with a wireless transceiver of the host device that is being used with the docking station 204. This interface may communicate data (e.g., graphical or other data) to and/or from the docking station 204 to and/or from the connected host device. This interface may use, for example, a Wi-Fi^{™} protocol, a Bluetooth^{™} protocol, or any other appropriate wireless protocol useable to transfer data in this fashion.

This (or another) wireless transceiver is also used by the docking station 204 to connect to other wireless network devices (e.g., a network device such as a router) in order to receive independent data (e.g., data not from a host device) from a network. This data is used to operate the display apparatus 202 (e.g., used to power on and/or off the display apparatus 202, used to render a display on the display screen of 214 of the display apparatus 202 (such as, e.g., weather, news, or status of another device on the network)). This data may be, e.g., data received from an IoT system (such as, e.g., an loT home automation system).

The docking station 204 may include one or more connectors (for example, connectors 217, 222-226, 236) for connecting the docking station 204 to one or more external objects. As discussed above, the docking station 204 may communicate data and/or power to and/or from each of these external objects to and/or from the host device connected to the docking station 204 via the host device connector 218 and/or the wireless transceiver of the docking station 204.

For example, the docking station 204 may include a power source connector 217. The power source connector 217 may be connected to an external power source such as a battery, a connection to a utility transformer that is provided in a structure, or any other appropriate external power source. The connector to an external power source via the power source connector 217 may provide the docking station 204 the necessary power to function. Further, the docking station 204 may need to provide power to each of the display apparatus 202, one or more secondary display apparatuses (not shown), a host device (not shown), and/or one or more external objects connected to the docking station 204. This power (as supplied from the docking station 204 to these other devices) may be necessary for these other devices to operate, charge their internal batteries, and/or pass along power to external objects. The power to be supplied to these other devices by the docking station 204 may be drawn by the docking station 204 from the external power source via the power source connector 217. The power source connector 217 may be, for example, a DC connector, a USB (e.g., USB-C) connector, an IEC 420 C13 or C14 connector, or any other connector (including custom and/or hybrid connectors) capable of communicating power from an external power source to the docking station 204.

As another example, the docking station 204 may include USB connectors 222, which may be individually used by the docking station 204 as one of many possible connectors (e.g., power connectors, communications connectors, and/or data connectors). In some embodiments, one or more of the USB connectors 222 (or other data connectors) may be used to connect to input devices, such as mice and keyboards. Data from these input devices may travel through the docking station 204 to a connected host device via the host device connector 218 and/or the wireless transceiver of the docking station 204. In other embodiments, one or more of the USB connectors 222 (or other data connectors) may be used to connect output devices, such as speakers, secondary display screens, printers, or other output devices. Data to these output devices may travel from a connected host device through the docking station 204 via the host device connector 218 and/or the wireless transceiver of the docking station 204.

As another example, the docking station 204 may include an RJ-45 connector 224, which may be used by the docking station 204 as, for example, a communications connector. In some embodiments, communications data to and/or from a communications device (e.g., a router or other network device) connected to the RJ-45 connector 224 (or other communications connector) may travel through the docking station 204 to and/or from a connected host device via the host device connector 218 and/or the wireless transceiver of the docking station 204.

As another example, the docking station 204 may include an auxiliary graphical data connector 226, which may be, for example, an HDMI connector, a USB-C connector, or another data connector. In some embodiments, graphical data from a connected host device may travel from the host device via the host device connector 218 and/or the wireless transceiver of the docking station 204 through the docking station 204 to a secondary display apparatus (not shown) or another secondary display device that may be connected to the auxiliary graphical data connector 226. This graphical data may be used to render a display on a display screen of such secondary display apparatus or other secondary display device. In embodiments where a secondary display device is connected to the auxiliary graphical data connector 226 (or other data connector) in this fashion, the communication of graphical data through the docking station 204 to the secondary display device may be instead of, or in addition to, the communication of graphical data to the direct data connector 212 of the display apparatus 202 previously described.

As another example, the docking station 204 may include an auxiliary power out connector 236, which may be used by the docking station 204 as, for example, a power connector for use with a secondary display apparatus (not shown). The auxiliary power out connector 236 may be, for example, a DC connector, a USB (e.g., USB-C) connector, an IEC 420 C13 or C14 connector, or any other connector (including custom and/or hybrid connectors) capable of communicating power from the docking station 204 to another device. In some embodiments, power from the docking station 204 may travel to a secondary display apparatus that is connected to the auxiliary power out connector 236. This power may be provided to the secondary display apparatus so that it may operate. This power may be sourced by the docking station 204 from the power source connector 217.

The docking station 204 includes the direct power out connector 230. As described above, the direct power out connector 230 may interface with the direct power in connector 216 of the display apparatus 202 and may deliver power to the direct power in connector 216 to operate the display apparatus 102. The direct power out connector 230 may be, for example, a DC connector, a USB (e.g., USB-C) connector, or any other connector (including custom and/or hybrid connectors) capable of communicating power from the docking station 204 to the display apparatus 202.

The docking station 204 includes the direct data connector 232. As described above, the direct data connector 232 may interface with the direct data connector 212 of the display apparatus 202 to communicate graphical and/or other data from a host device connected to the docking station 204 to the display screen 214 of the display apparatus 202. The direct data connector 232 may be, for example, an HDMI connector, a DVI connector, a USB (e.g., USB-C) connector, a Thunderbolt^{™} 3 connector, or any other connector (including custom and/or hybrid connectors) capable of communicating graphical and/or other data from and/or to the docking station 204 and the display apparatus 202.

It is further contemplated that the features of the direct data connector 232 and the direct power out connector 230 may, in some embodiments, be combined into a single connector that is capable of performing both the data and power communication features described (e.g., a USB-C connector, a Thunderbolt^{™} 3 connector, and/or a custom and/or hybrid connector made for this combined purpose).

The docking station 204 includes a set of rails 209A, 209B. Each rail 209A, 209B may respectively engage with the rails 207A, 207B of the docking station receptacle 206 of the display apparatus 202 as the docking station 204 is slid down the back of the display apparatus 202 and into the docking station receptacle 206. As can be seen when compared to analogous connectors from FIGS. 1A-1B, the positions of the direct power in connector 216 and the direct data connector 212 of the docking station receptacle 206 and the direct power out connector 230 and the direct data connector 232 of the docking station 204 have been modified to account for the sliding nature of the embodiment of FIG. 2A (as opposed to, e.g., the insertion nature of the embodiment of FIG. 1A).

Various connectors of the docking station 204 (e.g., the host device connector 218, the auxiliary graphical data connector 226, and/or the auxiliary power out connector 236) may be placed at the end of cables (e.g., cables 220, 228, 238) integrated into the docking station 204 in order to facilitate simplicity in connecting the connector to its associated external object/host device. Other embodiments without such cables (e.g., where a fully detachable cable is separately provided to interface with the connector of the docking station 204 and a connector on the associated external object/host device, and/or where the associated external object/host device is connected directly to the docking station 204 via a connector integrated into the body of the docking station 204) are also contemplated.

FIG. 2B illustrates a back view of the docking station 204. The docking station 204 includes one or more attachment devices 234. As described above, the attachment devices 234 may interact with the attachment devices 208 of the docking station 204 in order to removably attach the docking station 204 to the docking station receptacle 206. In the embodiment of FIG. 2B, the attachment devices 234 may be metal attachment devices.

The docking station 204 may include the host device connector 218 (and associated circuitry) and/or the wireless protocol compatibilities necessary to connect with some types of host devices for the communication of data and/or power to and/or from that type of host device, while another docking station may include a different host device connector (and perhaps different associated circuitry) and/or the wireless protocol compatibilities to connect with other types of host devices for the communication of data and/or power to and/or from those types of host devices. It is anticipated that a user of the system 200 may be able to leverage the removably attachable nature of the docking stations herein described (e.g., the docking station 204) to switch between two or more such docking stations that are configured to work with the display apparatus 202 as needed, depending on current device (host or otherwise) compatibility requirements.

The docking station 204 may include one or more processors and/or controllers (not shown) having instructions thereon to implement one or more features of the docking station 204 as described herein. Similarly, the display apparatus 202 may include one or more processors and/or controllers (not shown) having instructions thereon to implement one or more features of the display apparatus 202 as described herein. Such instructions may be sourced from a non-transitory computer-readable medium (not shown) on or associated with these processors and/or controllers.

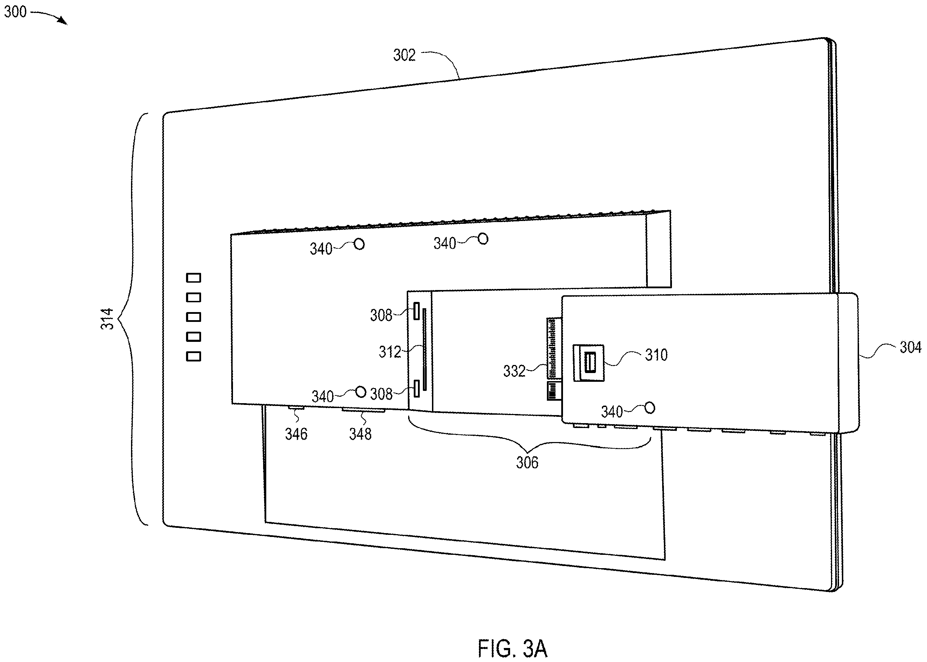

FIGS. 3A-3C illustrate components of a system 300 for docking with a host device, according to an embodiment. FIG. 3A illustrates a display apparatus 302 and a docking station 304.

The display apparatus 302 may include a docking station receptacle 306. The docking station receptacle 306 may be shaped to receive the docking station 304 when the docking station 304 is slid across the back of the display apparatus 302. The docking station 304 may be one of many possible docking stations (with compatibility with many possible host devices) that are useable with the display apparatus 302.

The docking station receptacle 306 includes one or more attachment devices 308 that may interact with attachment devices of the docking station 304 (not shown in FIG. 3A) to removably attach the docking station 304 in place once the docking station 304 has been placed into the docking station receptacle 306. Examples of possible attachment devices that may be used between the docking station 304 and the docking station receptacle 306 include magnet features, hook and catch features, slotted peg and catch features, or any other attachment device appropriate for securing the docking station 304 to the docking station receptacle 306. One, two, three, four, or any other number of these attachment devices may be used. In the embodiment of FIG. 3A, the attachment devices 308 are catch attachment devices appropriate to accept a hook.

The docking station 304 may include a docking station release mechanism 310. The docking station release mechanism 310 may release the docking station 304 from the docking station receptacle 306 by disengaging the attachment between the attachment devices 308 and any attachment devices of the docking station 304. For example, the docking station release mechanism 310 may disengage a magnetic connection between a magnet associated with an attachment device 308 and a piece of metal associated with an attachment device of the docking station 304. As another example, the docking station release mechanism 310 may disengage a hook associated with an attachment device of the docking station 304 from, for example, a catch associated with an attachment device 308 of the docking station 304. The docking station release mechanism 310 may be, for example, a button or a slider. It is contemplated that in some embodiments the docking station release mechanism 310 may be instead be included on the display apparatus 302.

The docking station receptacle 306 may include a combined direct data/power in connector 312. The combined direct data/power in connector 312 may be configured to interface with a combined direct data/power out connector 332 of the docking station 304 directly (without the use of a separate cable). This interface may allow the display apparatus 302 to receive and use graphical and/or other data from the docking station 304. For example, graphical data may be communicated to the docking station 304 by a host device connected to the docking station 304 and from there communicated via this interface to the display apparatus 302 and used to render a display on a display screen 314 of the display apparatus 302. The interface between the combined direct data/power in connector 312 and the combined direct data/power out connector 332 of the docking station 304 may also allow the display apparatus 302 to send data to the docking station 304.

The interface between the combined direct data/power in connector 312 and the combined direct data/power out connector 332 may also allow the docking station 304 to provide the display apparatus 302 with the power necessary to operate.

The combined direct data/power in connector 312 may be, for example, an HDMI connector, a DVI connector, a USB (e.g., USB-C) connector, a Thunderbolt^{™} 3 connector, or any other connector (including custom and/or hybrid connectors) capable of communicating power and graphical and/or other data from the docking station 304 for use with the display apparatus 302. In the embodiment of FIG. 3A, the combined direct data/power in connector 312 is a custom connector.

Relatedly, the docking station 304 may include a combined direct data/power out connector 332. As described above, the combined direct data/power out connector 332 may interface with the combined direct data/power in connector 312 of the display apparatus 302 and may deliver power to the combined direct data/power in connector 312 to operate the display apparatus 302.

The interface between the combined direct data/power out connector 332 and the combined direct data/power in connector 312 of the display apparatus 302 may also allow the docking station 304 to communicate graphical and/or other data from a host device connected to the docking station 304 to the display screen 314 of the display apparatus 302 (and/or other data transfers between the docking station 304 and the display apparatus 302) in the manner described above.

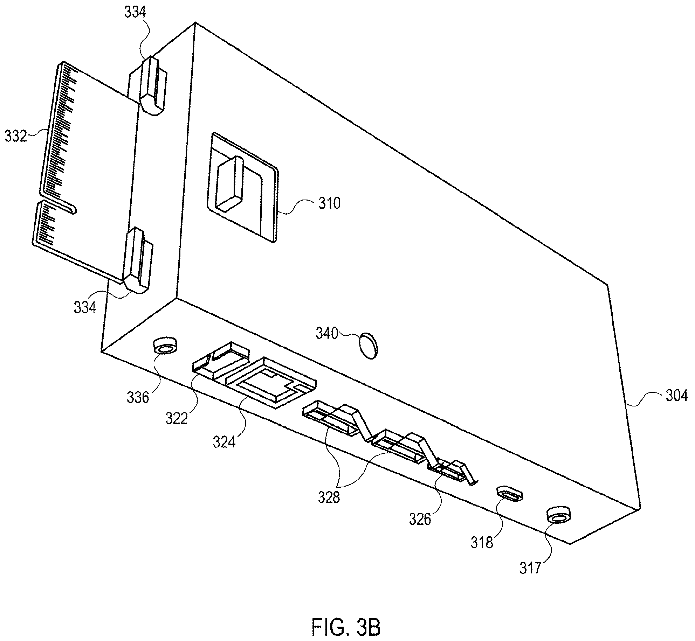

The combined direct data/power out connector 332 may be, for example, an HDMI connector, a USB (e.g., USB-C) connector, a Thunderbolt^{™} 3 connector, or any other connector (including custom and/or hybrid connectors) capable of communicating power and graphical and/or other data from the docking station 304 for use with the display apparatus 302. In the embodiment of FIG. 3B, the combined direct data/power out connector 332 is a custom connector.

Each of the display apparatus 302 and/or the docking station 304 may include one or more mounting features 340. The mounting features 340 may be used to attach a mount to the display apparatus 302 and/or the docking station 304 such that one or both of these can be mounted. In the embodiment of FIG. 3A, three mounting features 340 are present on the display apparatus 302 and one mounting feature 340 is present on the docking station 304. A subset of the mounting features 340 may be placed on each of the display apparatus 302 and the docking station 304 such that when the docking station 304 is placed in the docking station receptacle 306 to interface with the display apparatus 302 in the manner described herein, the mounting features 340 are aligned with the mounting features of a mount (e.g., are placed such that they are compatible/consistent with mounting features on a mount provided by the manufacturer of the display apparatus 302 and/or the docking station 304, and/or such that they are compatible/consistent with mounting features on another mount (e.g., a Flat Display Mounting Interface (FDMI) compatible mount (also known colloquially as a Video Electronics Standards Association (VESA) mount)).

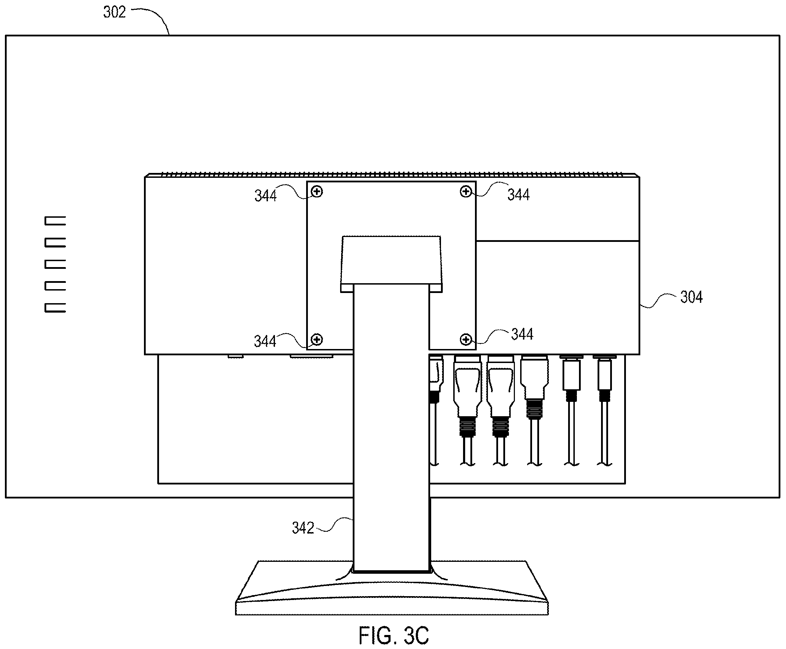

By placing a subset of the mounting features 340 on each of the display apparatus 302 and the docking station 304, it may be that the installation of a mount that uses one or more of the mounting features 340 from each of the display apparatus 302 and the docking station 304 may act to secure the docking station 304 in the docking station receptacle 306 of the display apparatus 302 (as shown in FIG. 3C). While FIGS. 3A-3C show (in aggregate) three mounting features 340 on the display apparatus 302, this is not strictly necessary; in various embodiments, a single mounting feature 340 on each of the display apparatus 302 and the docking station 304 is sufficient to secure the docking station 304 in the docking station receptacle 306 of the display apparatus 302. Mounting features 340 may be, e.g., holes (e.g., tapered holes), tabs, slots, slotted posts, hooks, screws, catches, or any other feature sufficient to interface with mounting features found on a mount. In the embodiment of FIG. 3A, the mounting features 340 are illustrated as holes.

The display apparatus 302 further includes an auxiliary power in connector 346. The auxiliary power in connector 346 may be capable of connecting to an external power source to receive the power to operate the display apparatus 302. The use of an auxiliary power in connector is described in more detail below.

The display apparatus 302 further includes a graphical data connector 348 (illustrated here as an HDMI port, but other types consistent with disclosure herein are contemplated) that can be used to communicate graphical data to the display apparatus 302 in via other than via the combined direct data/power connector 312 as describe herein.

It may be that in some instances, the display apparatus 302 is able to operate its display screen 314 via power received at the auxiliary power in connector 346 and/or graphical data received at the graphical data connector 348 in cases where the docking station 304 is not present.

FIG. 3B illustrates a perspective view of the docking station 304. The docking station 304 includes a host device connector 318. The host device connector 318 may interface with a connector of a host device that is being used with the docking station 304. Via this interface, the host device connector 318 electronically communicates data and power to and/or from the docking station 204 to and/or from the connected host device. The host device connector 318 may be, e.g., a USB-C connector, a Thunderbolt^{™} 3 connector, or any other connector (including custom and/or hybrid connectors) that may be used to interface with a connector of the connected host device for this purpose. In the embodiment of FIG. 3B, the host device connector 318 is illustrated as a USB-C connector.

In some embodiments, the docking station 304 includes a wireless transceiver (internal, not shown in FIG. 3B). This wireless transceiver may communicate with a wireless transceiver of the host device that is being used with the docking station 304. Via this interface, the wireless transceiver may electronically communicate data (e.g., graphical or other data) to and/or from the docking station 304 to and/or from the connected host device. This interface may use, for example, a Wi-Fi^{™} protocol, a Bluetooth^{™} protocol, or any other appropriate wireless protocol useable to transfer data in this fashion.

This (or another) wireless transceiver is also used by the docking station 304 to connect to other wireless network devices (e.g., a network device such as a router) in order to receive independent data (e.g., data not from a host device) from a network. This data is used to operate the display apparatus 302 (e.g., used to power on and/or off the display apparatus 302, used to render a display on the display screen of 314 of the display apparatus 302 (such as, e.g., weather, news, or status of another device on the network)). This data may be, e.g., data received from an IoT system (such as, e.g., an loT home automation system).

The docking station 304 may include one or more connectors (for example, connectors 317, 322-328, 336) for connecting the docking station 304 to one or more external objects. As discussed above, the docking station 304 may communicate data and/or power to and/or from each of these external objects to and/or from the host device connected to the docking station 304 via the host device connector 318 and/or the wireless transceiver of the docking station 304.

For example, the docking station 304 may include a power source connector 317. The power source connector 317 may be connected to an external power source such as a battery, a connection to a utility transformer that is provided in a structure, or any other appropriate external power source. The connector to an external power source via the power source connector 317 may provide the docking station 304 the necessary power to function. Further, the docking station 304 may need to provide power to each of the display apparatus 302, one or more secondary display apparatuses (not shown), a host device (not shown), and/or one or more external objects (not shown) connected to the docking station 304. This power (as supplied from the docking station 304 to these other devices) may be necessary for these other devices to operate, charge their internal batteries, and/or pass along power to external objects. The power to be supplied to these other devices by the docking station 304 may be drawn by the docking station 304 from the external power source via the power source connector 317. The power source connector 317 may be, for example, a DC connector, a USB (e.g., USB-C) connector, an IEC 420 C13 or C14 connector, or any other connector (including custom and/or hybrid connectors) capable of communicating power from an external power source to the docking station 304. In the embodiment of FIG. 3B, the power source connector 317 is illustrated as a DC connector.

As another example, the docking station 304 may include one or more USB connectors 322, which may be individually used by the docking station 304 as one of many possible connectors (e.g., power connectors, communications connectors, and/or data connectors). In some embodiments, one or more of the USB connectors 322 (or other data connectors) may be used to connect to input devices, such as mice and keyboards. Data from these input devices may travel through the docking station 304 to a connected host device via the host device connector 318 and/or the wireless transceiver of the docking station 304. In other embodiments, one or more of the USB connectors 322 (or other data connectors) may be used to connect output devices, such as speakers, secondary display screens, printers, or other output devices. Data to these output devices may travel from a connected host device through the docking station 304 via the host device connector 318 and/or the wireless transceiver of the docking station 304.

As another example, the docking station 304 may include an RJ-45 connector 324, which may be used by the docking station 304 as, for example, a communications connector. In some embodiments, communications data to and/or from a communications device (e.g., a router or other network device) connected to the RJ-45 connector 324 (or other communications connector) may travel through the docking station 304 to and/or from a connected host device via the host device connector 318 and/or the wireless transceiver of the docking station 304.

As another example, the docking station 304 may include an external HDMI connector 326 and/or one or more DisplayPort^{™} connectors 328, each of which may be used by the docking station 304 as, for example, auxiliary graphical data connector(s). In some embodiments, graphical data from a connected host device may travel from the host device via the host device connector 318 and/or the wireless transceiver of the docking station 304 through the docking station 304 to a secondary display apparatus (not shown) or another secondary display device that may be connected to any of the external HDMI connector 326 or the DisplayPort^{™} connectors 328. This graphical data may be used to render a display on a display screen of such secondary display apparatus or other secondary display device. In embodiments where a secondary display device is connected to the external HDMI connector 326 or a DisplayPort^{™} connector 328 (or other data connector) in this fashion, the communication of graphical data through the docking station 304 to the secondary display device may be instead of, or in addition to, the communication of graphical data to the combined direct data/power connector 312 of the display apparatus 302 previously described.

As another example, the docking station 304 may include an auxiliary power out connector 336, which may be used by the docking station 304 as, for example, a power connector for use with a secondary display apparatus (not shown). The auxiliary power out connector 336 may be, for example, a DC connector, a USB (e.g., USB-C) connector, an IEC 420 C13 or C14 connector, or any other connector (including custom and/or hybrid connectors) capable of communicating power from the docking station 304 to another device. In some embodiments, power from the docking station 304 may travel to a secondary display apparatus that is connected to the auxiliary power out connector 336. This power may be provided to the secondary display apparatus so that it may operate. This power may be sourced by the docking station 304 from the power source connector 317. In the embodiment of FIG. 3B, the power out connector 336 is illustrated as a DC connector.

The docking station 304 includes one or more attachment devices 334. As described above, the attachment devices 334 may interact with the attachment devices 308 of the docking station receptacle 306 of FIG. 3A in order to removably attach the docking station 304 to the docking station receptacle 306. In the embodiment of FIG. 3B, the hook attachment devices 334 are illustrated as hook features corresponding to the catch attachment devices 308 described above in relation to FIG. 3A.

The docking station 304 may include the host device connector 318 (and associated circuitry) and/or the wireless protocol compatibilities necessary to connect with some types of host devices for the communication of data and/or power to and/or from that type of host device, while another docking station may include a different host device connector (and perhaps different associated circuitry) and/or the wireless protocol compatibilities to connect with other types of host devices for the communication of data and/or power to and/or from those types of host devices. It is anticipated that a user of the system 300 may be able to leverage the removably attachable nature of the docking stations herein described (e.g., the docking station 304) to switch between two or more such docking stations that are configured to work with the display apparatus 302 as needed, depending on current device (host or otherwise) compatibility requirements.

The docking station 304 may include one or more processors and/or controllers (not shown) having instructions thereon to implement one or more features of the docking station 304 as described herein. Similarly, the display apparatus 302 may include one or more processors and/or controllers (not shown) having instructions thereon to implement one or more features of the display apparatus 302 as described herein. Such instructions may be sourced from a non-transitory computer-readable medium (not shown) on or associated with these processors and/or controllers.

FIG. 3C illustrates the docking station 304 having been placed in the docking station receptacle 306 of the display apparatus 302, with the combined display apparatus 302 and docking station 304 having been attached to a mount 342. The mount 342 may be, e.g., a VESA mount. As illustrated, the mount may be designed such that it does not interfere with access by one or more cables to the various connectors (described above) of the docking station 304 when in use.

The mount 342 includes mounting features 344 that are interfaced with the mounting features 340 showing (by way of example and not by way of limitation, as described above) one mounting feature 344 connected to one mounting feature 340 present on the docking station 304 and three mounting features 344 connected to three mounting features 340 present on the display apparatus 302. Mounting features 344 may be screws, holes, tabs, slots, slotted posts, hooks, or any other feature sufficient to interface with mounting features as those features have been described above. In the embodiment of FIG. 3C, the mounting features 344 are illustrated as screws. As illustrated, the installation of the mount 342 to the combined display apparatus 302 and docking station 304 has acted to further secure the docking station 304 in the docking station receptacle 306 (see FIG. 3A) of the display apparatus 302 in the manner described above.

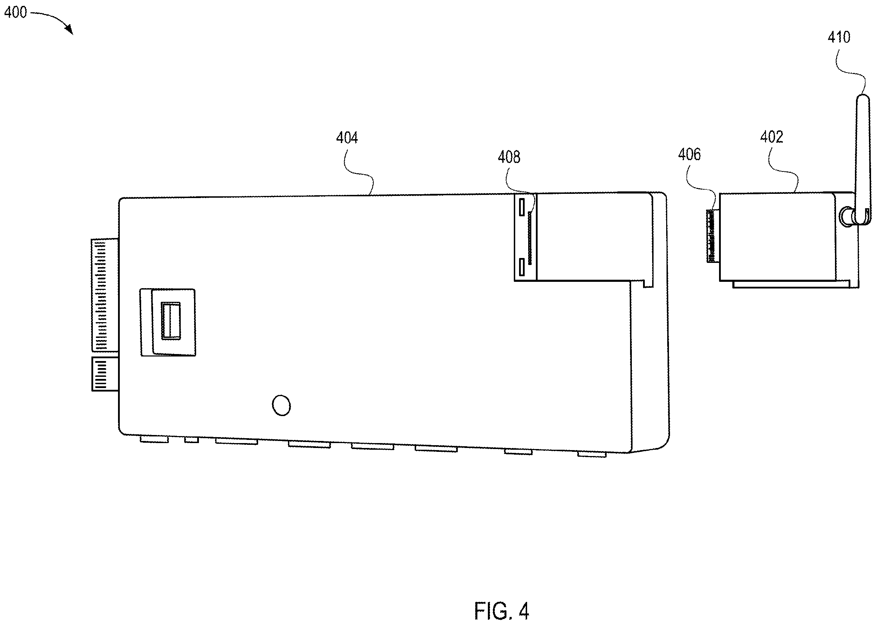

FIG. 4 illustrates a docking station 400 with a wireless transceiver 402 that is removable from a body 404 of the docking station 400, according to an embodiment. The wireless transceiver 402 may include a transceiver data/power in connector 406 that interfaces with a transceiver data/power out connector 408 on the body 404 of the docking station 400. The wireless transceiver 402 may draw data and/or power from the transceiver data/power out connector 408 through the transceiver data/power in connector 406. This data and/or power may be sourced at the docking station 400 (e.g., via one or more of connectors of the docking station 400, analogously to embodiments herein described) and from there provided to the wireless transceiver 402 to be sent to, for example, a host device and/or other wireless network device(s). Further, the wireless transceiver 402 may provide received data (e.g., data received at the wireless transceiver 402 from the host device and/or from other wireless network device(s), as described herein) for use at the docking station 400.

The wireless transceiver 402 may further include an external antenna 410. The external antenna 410 may be used to wirelessly communicate wireless signals to and/or from a host device and/or other wireless network device(s) in the manner described herein. Use of the external antenna 410 may result in the reception of a wireless signal that is more powerful than, or different than, e.g., a reception of a signal at a wireless transceiver (whether integrated or removable) that does not use an external antenna. While the antenna 410 has been illustrated on the wireless transceiver 402 (which is removable), it is contemplated that an external antenna may be used with integrated (rather than removable) wireless transceivers of docking stations having integrated wireless transceivers.

It may be that there are a plurality of wireless transceivers (e.g., the wireless transceiver 402, and other wireless transceivers) which are removable and are each configured to removably interface with the docking station 400 in the manner described. It may be possible to switch one wireless transceiver (e.g., the wireless transceiver 402) for another wireless transceiver (or vice versa) in order to use a wireless transceiver at the docking station 400 that is compatible with a particular host device, and/or that supports one or more desired wireless standards that allow for the wireless communications (including, e.g., loT communications) that are described herein.

While the docking station 400 has been illustrated as similar in style to the docking station 304 of FIGS. 3A-3C, it is contemplated that any docking station discussed herein (e.g., the docking stations 104 of FIGS. 1A-1B and 204 of FIGS. 2A-2B) may also include a removable wireless transceiver as described herein.

It is contemplated that other embodiments of docking stations (e.g., the docking stations described in relation to FIGS. 1-3) have internal (non-removable) wireless transceivers. It is contemplated that any type of docking station ( having an integrated wireless transceiver, or having a removable wireless transceiver) with any type of antenna(s) (no antennas, one or more internal antenna(s), one or more external antenna(s)) may be used in embodiments discussed herein.

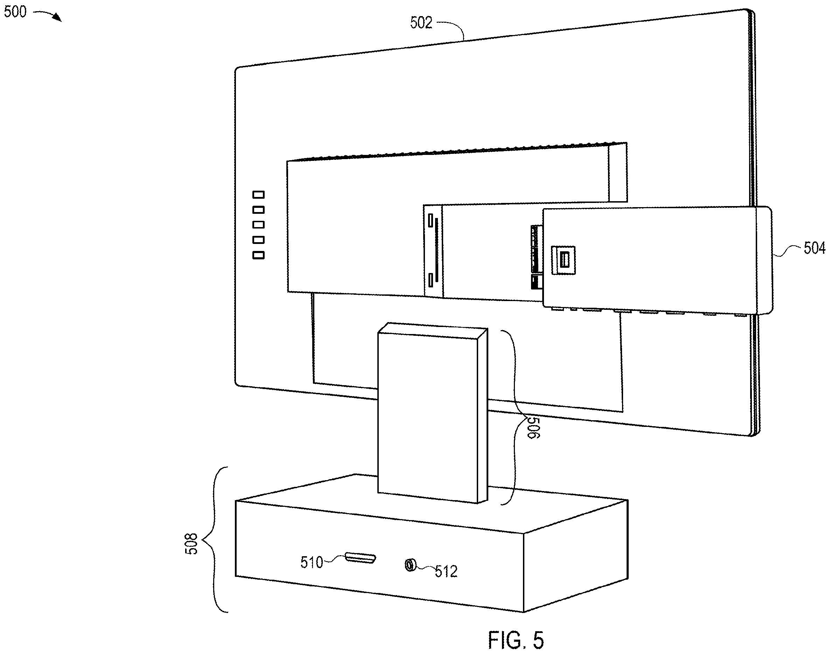

FIG. 5 illustrates components of a system 500 for docking with a host device, according to an embodiment. It is contemplated that a display apparatus of the present disclosure may or may not include a neck and/or a base incorporated into the display apparatus. For example, it is noted that the display apparatuses 102 of FIG. 1A and 202 of FIG. 2A have been illustrated with a neck and a base. In FIG. 5, a display apparatus 502 is being used with a docking station 504. The docking station 504 may be similar to the docking station 304 of FIGS. 3B and 3C. Alternatively, another docking station described herein (such as, e.g., the docking station 400 of FIG. 4, with the removable wireless transceiver and an external antenna, or other docking station(s) described herein) may be used. The display apparatus 502 may be similar to the display apparatus 302 of FIGS. 3A and 3C, but may further include one or more of a neck 506 and/or a base 508.

The neck 506 and/or the base 508 of the display apparatus 502 may include any part of the components necessary for the display apparatus 502 to function, as described herein. For example, the base 508 has been illustrated with the graphical data port 510 and the auxiliary power in port 512 (which may serve the same purpose for the display apparatus 502 as, e.g., the graphical data connector 348 and the auxiliary power in connector 346 described above in relation to the display apparatus 302 of FIG. 3A). Any other component (including internal components) of the display apparatus 502 may be included in either of the neck or the base of the display apparatus when such neck and/or base are present.

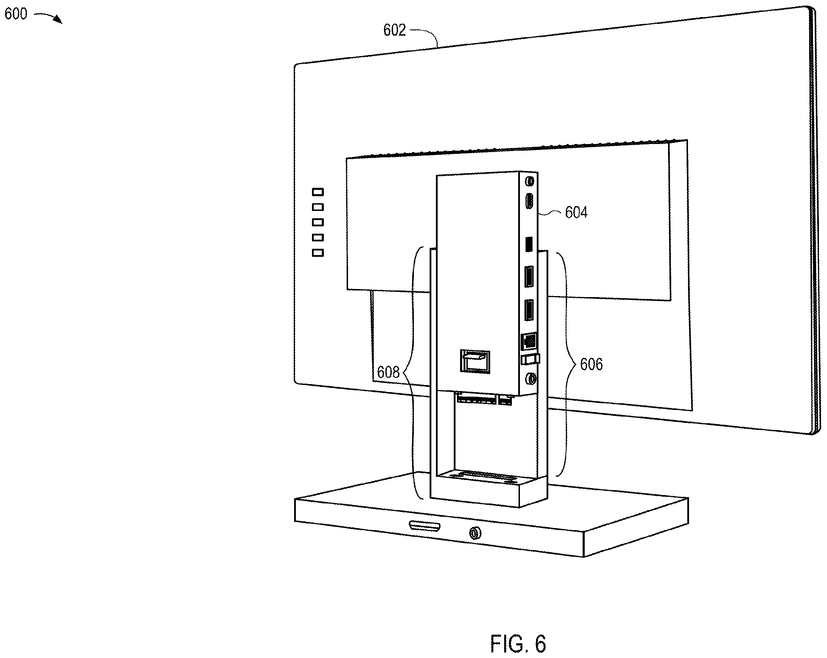

FIG. 6 illustrates components of a system 600 for docking with a host device, according to an embodiment. It is contemplated that for some embodiments of a display apparatus, a docking station may interface with a docking station receptacle that is in a neck portion of the display apparatus. For example, the docking station 604 may interface with a docking station receptacle 606 that is in the neck 608 of the display apparatus 602, in the manner illustrated. The docking station 604 may be similar to the docking station 304 of FIGS. 3B and 3C. Alternatively, another docking station described herein (such as, e.g., the docking station 400 of FIG. 4, with the removable wireless transceiver and an external antenna, or other docking station(s) described herein) may be used.

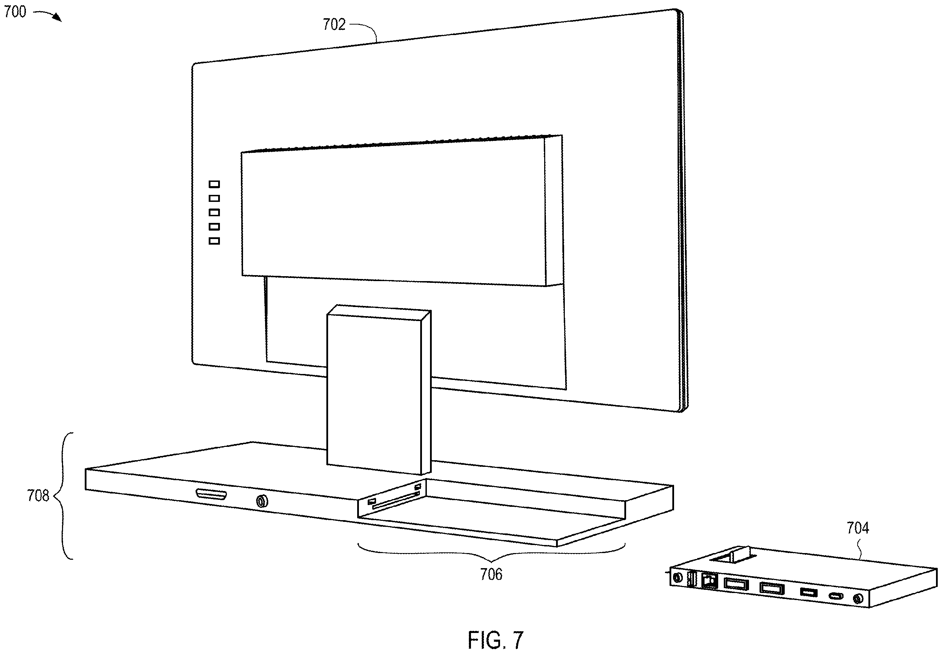

FIG. 7 illustrates components of a system 700 for docking with a host device, according to an embodiment. It is contemplated that for some embodiments of a display apparatus, a docking station may interface with a docking station receptacle that is in a base portion of the display apparatus. For example, the docking station 704 may interface with a docking station receptacle 706 that is in the base 708 of the display apparatus 702, in the manner illustrated. The docking station 704 may be similar to the docking station 304 of FIGS. 3B and 3C. Alternatively, another docking station described herein (such as, e.g., the docking station 400 of FIG. 4, with the removable wireless transceiver and an external antenna, or other docking station(s) described herein) may be used.

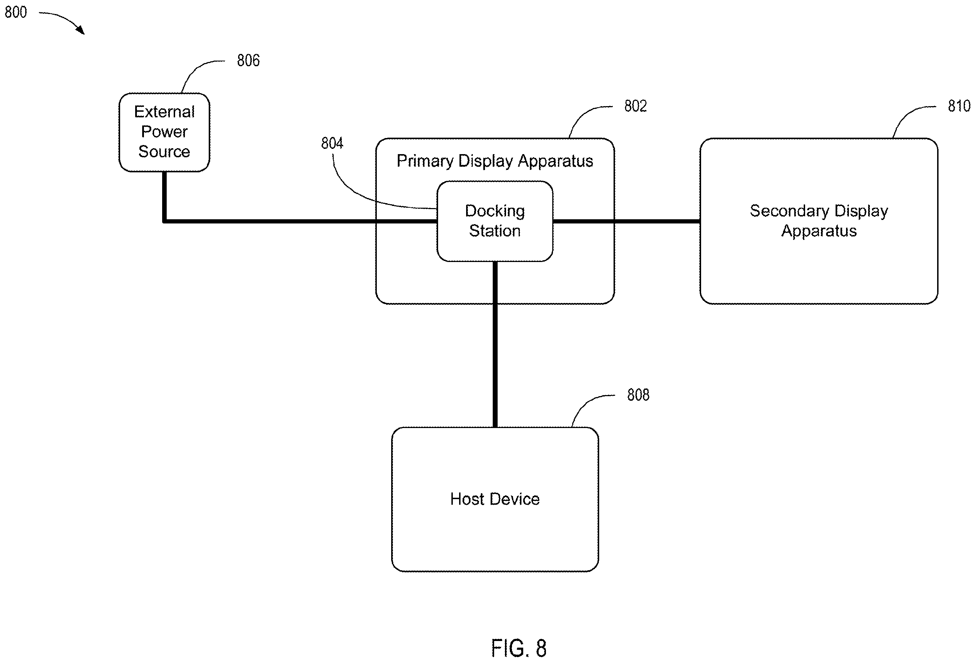

FIG. 8 is a block diagram of a system 800 for docking with a host device 808, according to an embodiment. The system 800 further includes a primary display apparatus 802, a docking station 804, an external power source 806, and a secondary display apparatus 810. In the system 800, the docking station 804 may have been removably attached to the primary display apparatus 802 at a docking station receptacle (not illustrated) of the primary display apparatus 802, in like manner to that described above in relation to FIGS. 1A-1B and/or FIGS. 2A-2B.

The external power source 806 may be connected to the docking station 804. The external power source 806 may be, for example, a battery, a connection to a utility transformer via a wall outlet, or any other appropriate external power source. The docking station 804 may take power directly from the external power source 806 in order to operate. It may further provide at least some of the power from the external power source 806 to the primary display apparatus 802 to which it has been attached (e.g., via the interface between a direct power in connector of the primary display apparatus 802 and a direct power out connector of the docking station 804 in like manner to that described above in relation to FIGS. 1A-1B and/or FIGS. 2A-2B). The primary display apparatus 802 may use power supplied via the docking station 804 in this way to operate.

In some embodiments, at least some of the power received at the docking station 804 from the external power source 806 may be communicated to the host device 808 connected to the docking station 804. This power may be used by the host device 808 to operate, charge a battery of the host device 808, power external objects that are connected directly to any connector(s) of the host device 808, and/or for any other purpose for which the host device 808 may require power. This power may be provided from the docking station 804 to the host device 808 via a host device connector (e.g., the host device connectors 118, 218 described in relation to FIG. 1A and FIG. 2A above). The host device 808 may provide graphical data (and/or other data) via the host device connector and/or the wireless transceiver of the docking station to the docking station 804 for communication and use with the primary display apparatus 802 and/or any external objects (such as input and/or output devices) connected to the docking station 804.

The system 800 further includes the secondary display apparatus 810. The secondary display apparatus 810 may be connected to, for example, a connector (such as an external HDMI connector) of the docking station 804. Similarly to embodiments discussed above, communication of graphical data from the host device 808 to the secondary display apparatus 810 may be instead of, or in addition to, the communication of graphical data to the direct data connector of the primary display apparatus 802. In some embodiments, at least some of the power received at the docking station 804 from the external power source 806 may be communicated to the secondary display apparatus 810 connected to the docking station 804. This power may be used by the secondary display apparatus 810 to operate and/or for any other purpose for which the secondary display apparatus 810 may require power. This power may be provided from the docking station 804 to the host device 808 via an auxiliary power out connector (e.g., the auxiliary power out connectors 136, 236 described in relation to FIGS. 1A-1B and/or FIGS. 2A-2B above). These auxiliary power out connectors may be connected to a direct power in connector located at a docking station receptacle of the secondary display apparatus 810 or alternatively may be connected to an auxiliary power in connector of the secondary display apparatus 810 (that is not a direct power in connector of a docking station receptacle of the secondary display apparatus 810).

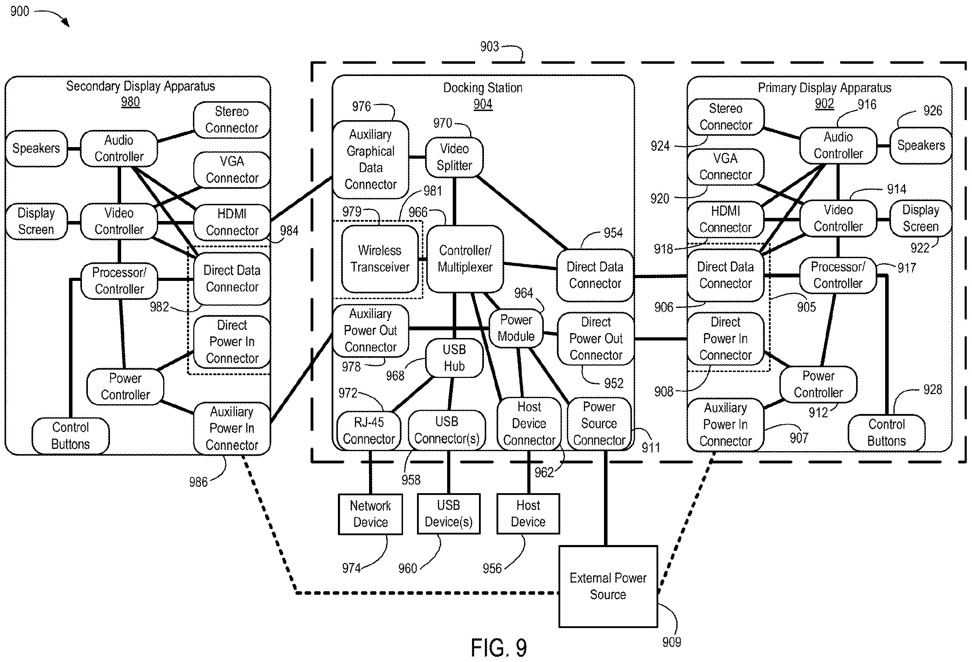

FIG. 9 is a block diagram of a system 900 for docking with a host device 956, according to an embodiment. The system 900 includes a primary display apparatus 902, a docking station 904, and a secondary display apparatus 980. In the embodiment of FIG. 9, the docking station 904 is removably attached (as represented by box 903) to the primary display apparatus 902 at a docking station receptacle 905 of the primary display apparatus 902, in like manner to that described above in relation to, e.g., FIGS. 1A-1B, 2A-2B, 3A-3C, 5, 6, 7 and/or FIG. 8 (and this should be understood even though, merely for purposes of illustration, the docking station 904 has been drawn apart from, and similarly sized to, the display apparatuses 902 and 980).

The primary display apparatus 902 includes a direct data connector 906. The direct data connector 906 of the primary display apparatus 902 may be located in, for example, the docking station receptacle 905 of the primary display apparatus 902. The direct data connector 906 is configured to interface with and communicate data to and/or from a direct data connector 954 of the docking station 904, in the manner described above. The direct data connector 906 of the primary display apparatus 902 and/or the direct data connector 954 of the docking station 904 may be, for example, HDMI connectors, USB connectors, or any other appropriate connectors as described above. The data received at the primary display apparatus 902 via the direct data connector 954 may be graphical and/or other data communicated by the docking station 904 from the host device 956.

The primary display apparatus 902 includes a direct power in connector 908. The direct power in connector 908 may be located in, for example, the docking station receptacle 905 of the primary display apparatus 902. The direct power in connector 908 is configured to interface with and receive power from a direct power out connector 952 of the docking station 904. The direct power in connector 908 and the direct power out connector 952 may be, for example, DC connectors, USB-C connectors, or any other appropriate connector as explained above. The power received at the primary display apparatus 902 via the direct power in connector 908 may be used to operate the primary display apparatus 902.

The direct data connector 906 and the direct power in connector 908 may, in some embodiments, be combined into a single combined direct data/power in connector (e.g., the combined direct data/power in connector 312 of FIG. 3A) as described above. Further, the direct data connector 954 and the direct power out connector 952 may, in some embodiments, be combined into a single combined direct data/power out connector (e.g., the combined direct data/power out connector 332 of FIGS. 3A-3B) as described above.

The primary display apparatus 902 may also include a video controller 914. The video controller 914 may be able to receive graphical data from, for example, the direct data connector 906. Further, the video controller 914 may receive graphical data (either alternatively or additionally) from, for example, an HDMI connector 918 and/or a Video Graphics Array (VGA) connector 920 of the primary display apparatus 902 (which may not be located in the docking station receptacle 905 of the primary display apparatus 902). Other types of connectors (such as, e.g., DVI connectors) are also contemplated to provide graphical data to the video controller 914 instead of, or in addition to, the direct data connector 906 of the docking station receptacle 905. The video controller 914 may then select one or more of the graphical data received from the direct data connector 906, the HDMI connector 918, the VGA connector 920, and/or any other such connector for use to render a display on a display screen 922 of the primary display apparatus 902.

The primary display apparatus 902 may also include an audio controller 916. The audio controller 916 may be able to receive audio data from, for example, the direct data connector 906. Further, the audio controller 916 may receive audio data (either alternatively or additionally) from, for example, the HDMI connector 918 and/or a stereo connector 924 (which may not be located in the docking station receptacle 905 of the primary display apparatus 902). Other types of connectors (such as, e.g., optical audio connectors) are also contemplated to provide audio data to the audio controller 916 instead of or in addition to the direct data connector 906 of the docking station receptacle 905. The audio controller 916 may then select one or more of the audio data received from the direct data connector 906 of the docking station receptacle 905, the HDMI connector 918, and/or the stereo connector 924 for reproduction on speakers 926 of the primary display apparatus 902.

While the primary display apparatus 902 has been illustrated as being removably attached 903 with the docking station 904, it should be understood that the primary display apparatus 902 may be used to display data and perform other functions without being removably attached 903 to the docking station 904 via the use of one or more of, for example, the auxiliary power in connector 907, the HDMI connector 918 and/or the VGA connector 920, the stereo connector 924, and/or another connector(s) present on the primary display apparatus 902.

The primary display apparatus 902 may further include control buttons 928. The control buttons 928 may include a power button for turning the primary display apparatus 902 on and off. This may also turn on and off any docking station attached to the primary display apparatus 902 (e.g., the docking station 904) via signal(s) sent to the docking station 904 via the direct data connector 906. The control buttons 928 may include one or more volume buttons for adjusting the volume of the speakers 926 of the primary display apparatus 902. The control buttons 928 may further include a reset button to reset the primary display apparatus 902 (which may have the effect of resetting any docking station attached to the primary display apparatus 902 (e.g., the docking station 904) via signal(s) sent to the docking station via the direct data connector 906).

The primary display apparatus 902 may include a power controller 912. The power controller 912 may be responsible for distributing power to the rest of the primary display apparatus 902 in order to operate the primary display apparatus 902. This power may be received from, for example, the docking station 904 via the interface between the direct power out connector 952 of the docking station 904 and the direct power in connector 908 of the primary display apparatus 902, in the manner described above.

Alternatively, the power controller 912 may receive its power from an auxiliary power in connector 907. The auxiliary power in connector 907 may be capable of connecting to an external power source 909 to receive the power to operate the primary display apparatus 902. The external power source 909 may be, for example, a battery, a connection (whether direct or through intermediate device(s)) to a utility transformer, or any other appropriate external power source. The external power source 909 may include, for example, a DC connector, a USB (e.g., USB-C) connector, an IEC 420 C13 or C14 connector, or any other connector (including custom and/or hybrid connectors) capable of communicating power from the external power source 909 to another device. The auxiliary power in connector 907 may be any connector (including custom and/or hybrid connectors) capable of connecting to a connector on the external power source 909. A connection between the auxiliary power in connector 907 and the external power source 909 may be useful to provide power to the primary display apparatus 902 in cases where, for example, the docking station 904 is not attached to the primary display apparatus 902 or is otherwise not providing power to the primary display apparatus 902 at the direct power in connector 908 in the manner described above.

Any of the power controller 912, the video controller 914, and/or the audio controller 916, or another processor/controller 917 of the primary display apparatus 902 may have instructions thereon to implement one or more features of the primary display apparatus 902 consistent with embodiments of primary display apparatuses discussed herein. Such instructions may be sourced from a non-transitory computer-readable medium (not shown) on or associated with these processors and/or controllers.

As will be described in more detail below, the auxiliary power in connector of a display apparatus (such as the auxiliary power in connector 907) may alternatively receive power from an auxiliary power out connector of a docking station (such as an auxiliary power out connector 978 of the docking station 904).

The docking station 904 may include a power source connector 911. The power source connector 911 may receive power from the external power source 909. The power source connector 911 may be any connector (including custom and/or hybrid connectors) capable of connecting to a connector on the external power source 909. The power provided may be communicated to a power module 964 of the docking station 904 for distribution to the rest of the docking station 904 in order to operate the docking station 904. There may be sufficient remaining power for the docking station 904 to further communicate power to the primary display apparatus 902 via the direct power out connector 952 in the matter described herein. Additionally (or alternatively), there may be sufficient remaining power to be communicated to, for example, the host device 956 in the manner described herein. Additionally (or alternatively), there may be sufficient remaining power to be communicated to, for example, the auxiliary power out connector 978, in order to provide power to a secondary display apparatus (e.g., the secondary display apparatus 980) for it to operate. There may also be sufficient power remaining to communicate power (perhaps indirectly) to external objects connected to other connectors of the docking station 904 (e.g., USB device(s) 960 connected to USB connector(s) 958), or for any other purpose for which power may be used by the docking station 904.

The docking station 904 further includes a host device connector 962. The host device connector 962 may connect the docking station 904 to the host device 956. The host device connector 962 may communicate power from the power module 964 to the host device 956. The host device connector 962 may further transmit data to and/or from the host device 956 to and/or from a controller/multiplexer 966. The host device connector 962 may be, in some embodiments, a Thunderbolt^{™} 3/USB-C connector.

The docking station 904 further includes a wireless transceiver 979. This wireless transceiver may communicate with a wireless transceiver of the host device 956. This interface may communicate data (e.g., graphical or other data) to and/or from the docking station 904 to and/or from the host device 956. This interface may use, for example, a Wi-Fi^{™} protocol, a Bluetooth^{™} protocol, or any other appropriate wireless protocol useable to transfer data in this fashion. The data may be provided additionally (or alternatively) to data being provided via the host device connector 962.

The wireless transceiver 979 is also used by the docking station 904 to connect to other wireless network devices (e.g., a network device such as a router) in order to receive independent data (e.g., data not from the host device 956) from a network. This data is used to operate the primary display apparatus 902 (e.g., used to power on and/or off the primary display apparatus 902, used to render a display on the display screen of 922 of the primary display apparatus 902 (such as, e.g., weather, news, or status of another device on the network)). This data may be, e.g., data received from an Internet of Things (IoT) system (such as, e.g., an loT home automation system). It is further contemplated that this data may be used to display settings corresponding to one or more networked devices (e.g., an loT device). It is also contemplated that the primary display apparatus 902 may be used to send commands to networked devices modifying these settings or performing other control tasks (e.g., via a control button 928 on the primary display apparatus 902, and/or via interaction with a display screen 922 of the primary display apparatus 902 that is a touch screen).

For example, the docking station 904 may receive an instruction via the wireless transceiver 979 to communicate with a control panel of the primary display apparatus 902 (which may be a software engine that exists in one or more of the power controller 912, the video controller 914, the audio controller 916, and/or another processor/controller 917 of the primary display apparatus 902). In this way, an administrator of the system 900 (through a separate network device in communication with the wireless transceiver 979) may have access to, e.g., information about the usage (power usage, time of use, time of day of usage statistics, etc.) of the primary display apparatus 902 (that is being tracked by, e.g., the control panel of the primary display apparatus). This communication with a control panel of the primary display apparatus 902 may also allow an administrator of the system 900 to set various control features (e.g., time allowed for use, time of day allowed for use, maximum allowed power use, etc.) to control the functionality of the primary display apparatus 902.

The controller/multiplexer 966 may receive power from the power module 964. The controller/multiplexer 966 may then communicate this power to, for example, a USB hub 968. The controller/multiplexer 966 may also send data (e.g., graphical data provided from the host device 956) to a video splitter 970. The controller/multiplexer 966 may also send and/or receive data (e.g., graphical data) to and/or from the host device connector 962, the USB hub 968, and/or the wireless transceiver 979 which may or may not be removeable 981 in the manner described herein. The controller/multiplexer 966 may be, in some embodiments, a Thunderbolt^{™} 3/USB-C controller/multiplexer.

The controller/multiplexer 966 or another processor/controller 917 of the docking station 904 may have instructions thereon to implement one or more other features of the docking station 904 consistent with embodiments of docking stations discussed herein. Such instructions may be sourced from a non-transitory computer-readable medium (not shown) on or associated with these processors and/or controllers.

The USB hub 968 may be connected to the USB connector(s) 958, and may be responsible for routing data and/or power between the USB connector(s) 958, an RJ-45 connector 972, and the controller/multiplexer 966. As described above, data at the USB connector(s) 958 may be provided by and/or sent to the USB device(s) 960. Further, power to the USB device(s) 960 may be provided by the USB hub 968. Data from the RJ-45 connector(s) 958 may be provided by a network device 974 connected to the RJ-45 connector 958.

The video splitter 970 may receive data (including graphical data) from the controller/multiplexer 966. This graphical data may have originated from, for example, the host device 956 in the manner described herein. The video splitter 970 may provide all or a portion of received graphical data to the direct data connector 954 of the docking station 904. This graphical data may be communicated, eventually, to the primary display apparatus 902 to be used to render a display on the display screen 922 in the manner described herein. The video splitter 970 may provide (alternatively or additionally) all or a portion of received graphical data to an auxiliary graphical data connector 976 of the docking station 904. From the auxiliary graphical data connector 976 that graphical data may then be communicated to the secondary display apparatus 980.

Although FIG. 9 has been illustrated with a primary display apparatus 902 and a secondary display apparatus 980, it is contemplated the more than two display apparatuses may be used at once with the docking station 904. Accordingly, it is contemplated that in some embodiments, the video splitter 970 of the docking station 904 may provide all or a portion of received graphical data to a plurality of auxiliary graphical data connectors (including the auxiliary graphical data connector 976). In these cases, each auxiliary graphical data connector beyond the auxiliary graphical data connector 976 may provide graphical data from the docking station 902 to other display apparatuses which are not illustrated.

The docking station 904 may further include the auxiliary power out connector 978. This auxiliary power out connector 978 may be an auxiliary power out connector according to FIGS. 1A and 2A. The auxiliary power out connector 978 may include, for example, a DC connector, a USB (e.g., USB-C) connector, an IEC 420 C13 or C14 connector, or any other connector (including custom and/or hybrid connectors) capable of communicating power from the auxiliary power out connector 978 to, for example, an auxiliary power in connector of a display apparatus (such as the auxiliary power in connector 986 of the secondary display apparatus 980). The auxiliary power out connector 978 may be able to connect to a display apparatus (e.g., the secondary display apparatus 980) in order to provide power to the display apparatus for the display apparatus to operate.

The secondary display apparatus 980 may contain the same (or similar) elements as provided in the primary display apparatus 902. However, in the system 900 of FIG. 9, the secondary display apparatus 980 is not attached to the docking station 904 at its docking station receptacle 982. (Note, as described above, that the docking station 904 is instead attached to the docking station receptacle 905 of the primary display apparatus 902.) Instead, the secondary display apparatus 980 receives data via an interface between the auxiliary graphical data connector 976 of the docking station 904 and, e.g., an HDMI connector 984 of the secondary display apparatus 980. Further, the secondary display apparatus 980 receives power via an interface between the auxiliary power out connector 978 of the docking station 904 and an auxiliary power in connector 986 of the secondary display apparatus 980. It is anticipated that in some embodiments, the secondary display apparatus 980 may instead be a display apparatus that does not include the docking station receptacle 982 (and, accordingly, does not include a direct data connector or a direct power in connector).

Alternatively, the auxiliary power in connector 986 of the secondary display apparatus 980 may receive power from an external power source rather than from the auxiliary power out connector 978 of the docking station 904. For example, the auxiliary power in connector 986 may receive power from the external power source 909. In these embodiments, the auxiliary power in connector 986 may be any connector (including custom and/or hybrid connectors) capable of connecting to a connector on the external power source 909. This may be useful to provide power to the secondary display apparatus 980 in cases where, for example, the auxiliary power out connector 978 of the docking station 904 is not available or is not otherwise providing power to the secondary display apparatus 980 via its auxiliary power out connector 978.

It is contemplated that in some embodiments, the functionalities of an auxiliary graphical data connector (such as the auxiliary graphical data connector 976) of the docking station 904 and the functionalities of the auxiliary power out connector 978 may be combined into a single connector (not shown). This connector may be a connector that is capable of providing both data and power from the docking station 904 to an external device (such as, e.g., a USB-C connector). Accordingly, it is contemplated that an external device (e.g., the secondary display apparatus 980) may include a single corresponding connector that is capable of receiving both data and power from the docking station 904 (such as, e.g., a USB-C connector) and by so doing perform both the functionalities of the auxiliary power in connector 986 and the data reception functionalities that are analogous to those that would occur using the HDMI connector 984 (or another data connector of the secondary display apparatus 980).

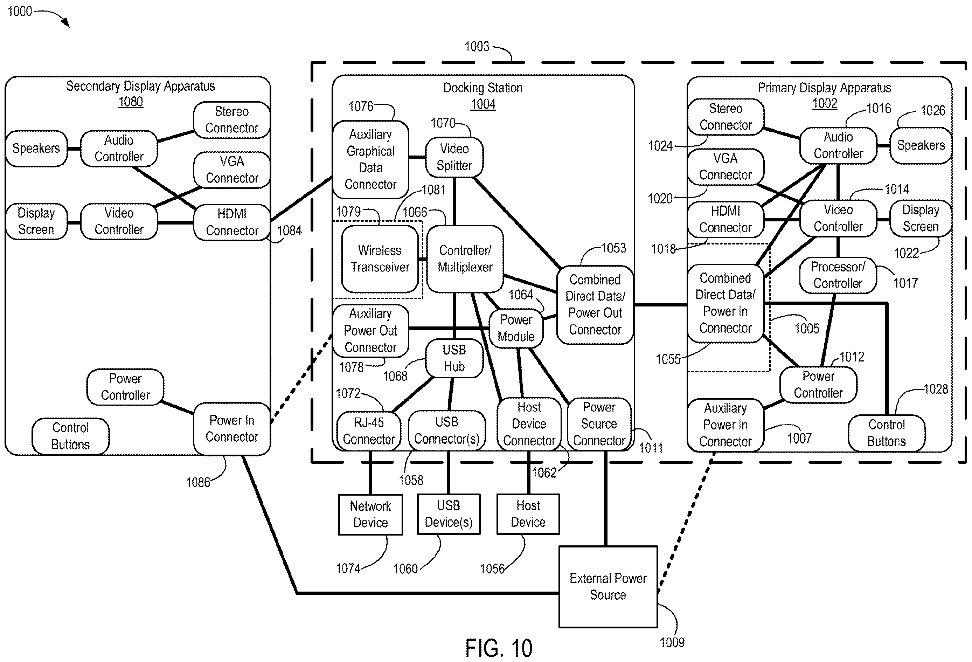

FIG. 10 is a block diagram of a system 1000 for docking with a host device, according to an embodiment. Many of the numbered elements of the system 1000 are similar to like-numbered elements of the system 900. However, at least the following differences apply:

The docking station 1004 has been illustrated with a combined direct data/power out connector 1053 instead of, e.g., the direct data connector 954 and the direct power out connector 952 described in relation to FIG. 9. This combined direct data/power out connector 1053 may combine the features of the direct data connector 954 and the direct power out connector 952 of FIG. 9 together into a single connector. This combined direct data/power out connector 1053 may be analogous to the combined direct data/power out connector 332 of FIGS. 3A-3B.

The primary display apparatus 1002 has been illustrated with a combined direct data/power in connector 1055 instead of, e.g., the direct data connector 906 and the direct power in connector 908 of FIG. 9. This combined direct data/power in connector 1055 may combine the features of the direct data connector 906 and the direct power in connector 908 of FIG. 9 into a single connector. This combined direct data/power in connector 1055 may be analogous to the combined direct data/power in connector 312 of FIG. 3A.

While the primary display apparatus 1002 has been illustrated as being removably attached 1003 with the docking station 1004, it should be understood that the primary display apparatus 1002 is used to display data and perform other functions without being removably attached 1003 to the docking station 1004 via the use of one or more of, for example, the auxiliary power in connector 1007, the HDMI connector 1018 and/or the VGA connector 1020, the stereo connector 1024, and/or another connector(s) present on the primary display apparatus.

The secondary display apparatus 1080 does not have a docking station receptacle analogous to the docking station receptacle 982 of the secondary display apparatus 980 of FIG. 9. This may be because the display apparatus 1080 is not a display apparatus that was developed specifically for docking with docking station 1004 at a docking station receptacle (e.g., the secondary display apparatus 1080 was developed by a different manufacturer than the manufacturer of the docking station 1004, or display apparatus 1080 was produced without the docking station receptacle to reduce costs of production).

The power in connector 1086 of the secondary display apparatus 1080 of FIG. 10 may be the only power in connector of the secondary display apparatus 1080 (and thus the power in connector 1086 is not termed an "auxiliary" power in connector). This power in connector 1086 is illustrated as being powered by the external power source 1009 instead of by, e.g., the auxiliary power out connector 1078 of the docking station 1004 (e.g., in the manner described in relation to the auxiliary power in connector 986 of FIG. 9). However, there may be some cases where the auxiliary power out connector 1078 of the docking station 1004 is still capable of providing power to the secondary display apparatus 1080 via the power in connector 1086 (e.g., when the secondary display apparatus 1080 is manufactured to be compatible with the auxiliary power out connector 1078 of the docking station 1004).

It is further contemplated that in some cases, a single connector (e.g., a USB-C connector) may perform the functionalities of the auxiliary graphical data connector 1076 and the auxiliary power out connector 1078, and this connector may interface (e.g., via a cable) with a corresponding single connector on the secondary display apparatus 1080, which may replace the uses of the HDMI connector 1084 and the power in connector 1086 illustrated in FIG. 10.

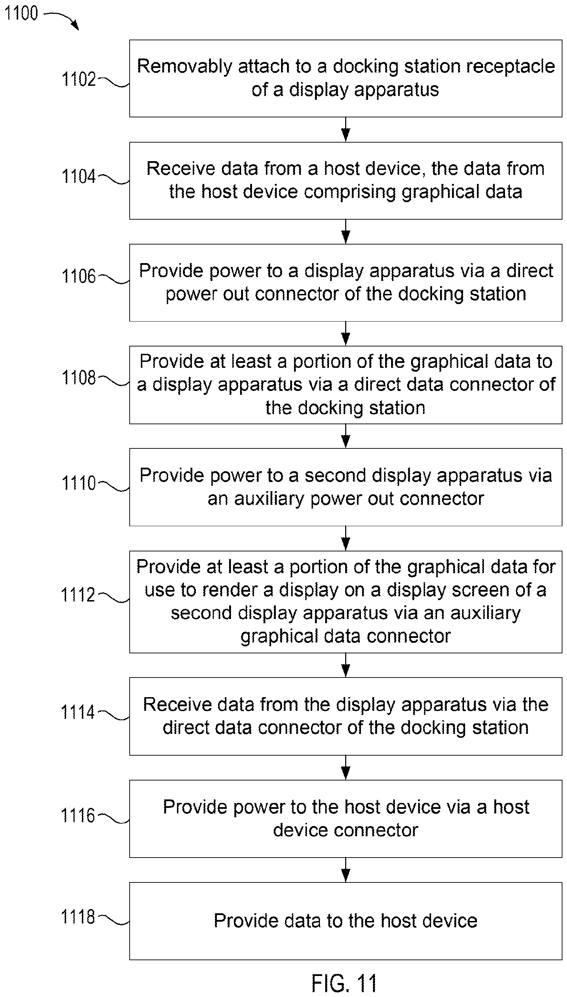

FIG. 11 illustrates a method 1100 of a docking station, according to one embodiment. The method 1100 may include more or less than other methods of docking stations contemplated by the present application.

The method 1100 may include removably attaching 1102 to a docking station receptacle of a display apparatus. The attachment of the docking station to the docking station receptacle may act to create a direct interface (without a separate cable) between a direct data connector of the docking station and a direct data connector of the display apparatus. This attachment may further act to create a direct interface (without a separate cable) between a direct power out connector of the docking station and a direct power in connector of the display apparatus.

The method 1100 further may include receiving 1104 data from a host device, the data from the host device comprising graphical data.

The method 1100 further may include providing 1106 power to a display apparatus via a direct power out connector of the docking station.

The method 1100 further may include providing 1108 at least a portion of the graphical data to the display apparatus via a direct data connector of the docking station.

The method 1100 further may include providing 1110 power to a second display apparatus via an auxiliary power out connector.

The method 1100 further may include providing 1112 at least a portion of the graphical data for use to render a display on a display screen of a second display apparatus via an auxiliary graphical data connector.

The method 1100 further may include receiving 1114 data from the display apparatus via the direct data connector of the docking station.

The method 1100 further may include providing 1116 power to the host device via a host device connector.

The method 1100 further may include providing 1118 data to the host device. This data may be provided via a host device connector and/or via a wireless transceiver of the docking station.

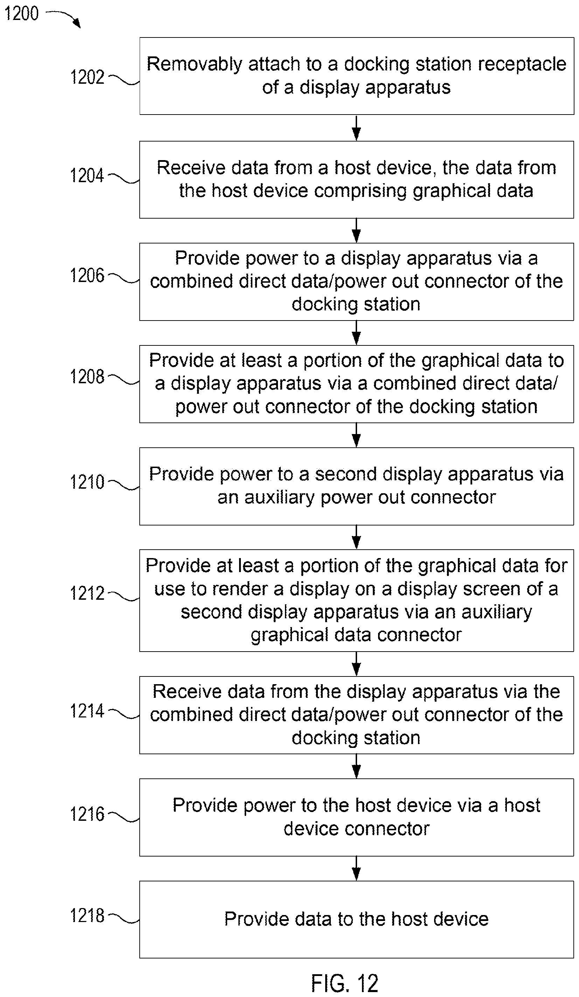

FIG. 12 illustrates a method 1200 of a docking station, according to one embodiment. The method 1200 may include more or less than other methods of docking stations contemplated by the present application.

The method 1200 may include removably attaching 1202 to a docking station receptacle of a display apparatus. The attachment of the docking station to the docking station receptacle may act to create a direct interface (without a separate cable) between a combined direct data/power out connector of the docking station and a combined direct data/power in connector of the display apparatus.

The method 1200 may include receiving 1204 data from a host device, the data from the host device comprising graphical data.

The method 1200 further may include providing 1206 power to a display apparatus via a combined direct data/power out connector of the docking station.

The method 1200 further may include providing 1208 at least a portion of the graphical data to the display apparatus via the combined direct data/power out connector of the docking station.

The method 1200 further may include providing 1210 power to a second display apparatus via an auxiliary power out connector.

The method 1200 further may include providing 1212 at least a portion of the graphical data for use to render a display on a display screen of a second display apparatus via an auxiliary graphical data connector.

The method 1200 further may include receiving 1214 data from the display apparatus via the combined direct data/power out connector of the docking station.

The method 1200 further may include providing 1216 power to the host device via a host device connector.

The method 1200 further may include providing 1218 data to the host device. This data may be provided via a host device connector and/or via a wireless transceiver of the docking station.

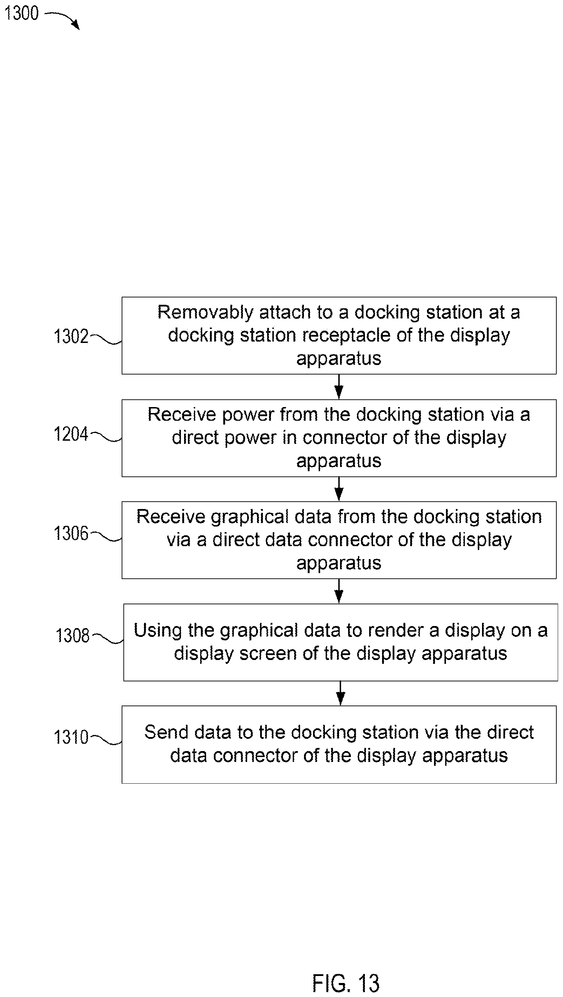

FIG. 13 illustrates a method 1300 of a display apparatus, according to an embodiment. The method 1300 may include more or less than other methods of display apparatuses contemplated by the present application.

The method 1300 may include removably attaching 1302 to a docking station at a docking station receptacle of the display apparatus. The attachment of the display apparatus to the docking station at the docking station receptacle may act to create a direct interface (without a separate cable) between a direct data connector of the docking station and a direct data connector of the display apparatus. This attachment may further act to create a direct interface (without a separate cable) between a direct power out connector of the docking station and a direct power in connector of the display apparatus.

The method 1300 may include receiving 1304 power from the docking station via a direct power in connector of the display apparatus.

The method 1300 further may include receiving 1306 graphical data from the docking station via a direct data connector of the display apparatus

The method 1300 further may include using 1308 the graphical data to render a display on a display screen of the display apparatus.

The method 1300 further may include sending 1310 data to the docking station via the direct data connector of the display apparatus.

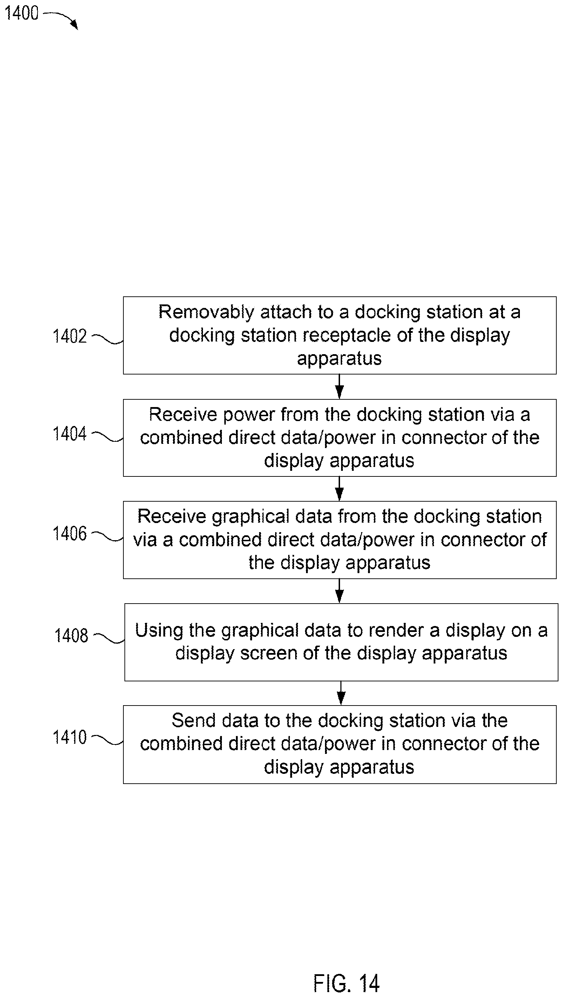

FIG. 14 illustrates a method 1400 of a display apparatus, according to an embodiment. The method 1400 may include more or less than other methods of display apparatuses contemplated by the present application.

The method 1400 may include removably attaching 1402 to a docking station at a docking station receptacle of the display apparatus. The attachment of the display apparatus to the docking station at the docking station receptacle may act to create a direct interface (without a separate cable) between a combined direct data/power out connector of the docking station and a combined direct data/power in connector of the display apparatus.

The method 1400 may include receiving 1404 power from the docking station via a combined direct data/power in connector of the display apparatus.

The method 1400 further may include receiving 1406 graphical data from the docking station via the combined direct data/power in connector of the display apparatus.

The method 1400 further may include using 1408 the graphical data to render a display on a display screen of the display apparatus.

The method 1400 further may include sending 1410 data to the docking station via the combined direct data/power in connector of the display apparatus.

The docking stations and display apparatuses disclosed herein may respectively include one or more processors and/or controllers using instructions present thereon to implement one or more functionalities of each such docking station/display apparatus as those functionalities are described herein. The instructions used by such processors and/or controllers may be stored on a non-transitory computer readable storage medium on (or in communication with) such controllers and/or processors. It is anticipated that these processors and/or controllers (and associated non-transitory computer-readable instructions for use thereon) may be present in any embodiment disclosed herein (even if not explicitly discussed).

This disclosure has been made with reference to various exemplary embodiments. Likewise, benefits, other advantages, and solutions to problems have been described above with regard to various embodiments. However, benefits, advantages, solutions to problems, and any element(s) that may cause any benefit, advantage, or solution to occur or become more pronounced are not to be construed as a critical, required, or essential feature or element. The scope of the present invention should, therefore, be determined by the following claims.

## Claims

1. A display apparatus and a docking station (104, 204, 304, 404, 504, 604, 704, 804, 904, 1004), wherein the docking station is configured to removably attach to a docking station receptacle (106, 206, 306, 606, 706) of the display apparatus (102, 202, 302, 502, 602, 702, 802, 902, 1002), comprising:
a direct data connector (132, 232, 332, 954, 1053) configured to interface with a direct data connector (112, 212, 312, 906, 1055) of the display apparatus to provide data communication between the docking station and the display apparatus;
a direct power out connector (130, 230, 952, 1053) configured to interface with a direct power in connector (116, 216, 908, 1055) of the display apparatus;
a host device connector (118, 218, 318, 962, 1062) configured to electronically communicate with a host device (808, 956, 1056), the host device connector to provide data and power communication between the docking station and the host device;
a wireless transceiver configured to allow the docking station to connect to other wireless network device(s) to facilitate wireless communication over a network between a wireless network device and the display apparatus in order to receive independent data to operate the display apparatus, wherein the wireless network device is associated with one or more output devices, wherein data to the output device(s) may travel from the host device through the docking station via the host device connector and/or the wireless transceiver; and
an attachment device (134, 234, 334) configured to removably attach the docking station to the docking station receptacle of the display apparatus,
wherein, to allow the display apparatus to operate when the docking station is not present in the docking station receptacle, the display apparatus comprises a graphical data port and an auxiliary power in port, and
wherein at least a portion of the data from the host device to the docking station and from the docking station to the display apparatus is graphical data configured to render a display on a display screen of the display apparatus.

2. The display apparatus and docking station of claim 1, wherein the attachment device is a hook.

3. The display apparatus and docking station of claim 1, further comprising at least three attachment devices configured to removably attach the docking station to the docking station receptacle of the display apparatus.

4. The display apparatus and docking station of claim 1, wherein the display apparatus comprises a release mechanism (110, 210, 310) configured to enable removal of the docking station from the receptacle of the display apparatus.

5. The display apparatus and docking station of claim 4, wherein the release mechanism is a slider.

## Patentansprüche

1. Ein Anzeigegerät und eine Andockstation (104, 204, 304, 404, 504, 604, 704, 804, 904, 1004), wobei die Andockstation konfiguriert ist, um abnehmbar an einer Andockstationsaufnahme (106, 206, 306, 606, 706) des Anzeigegeräts (102, 202, 302, 502, 602, 702, 802, 902, 1002) befestigt zu werden, beinhaltend:
einen direkten Datenverbinder (132, 232, 332, 954, 1053), der konfiguriert ist, um mit einem direkten Datenverbinder (112, 212, 312, 906, 1055) des Anzeigegeräts eine Schnittstelle zu bilden, um eine Datenkommunikation zwischen der Andockstation und dem Anzeigegerät bereitzustellen;
einen direkten Leistungsabgabe-Verbinder (130, 230, 952, 1053), der konfiguriert ist, um mit einem direkten Leistungseinspeise-Verbinder (116, 216, 908, 1055) des Anzeigegeräts eine Schnittstelle zu bilden;
einen Host-Vorrichtungs-Verbinder (118, 218, 318, 962, 1062), der konfiguriert ist, um elektronisch mit einer Host-Vorrichtung (808, 956, 1056) zu kommunizieren, wobei der Host-Vorrichtungs-Verbinder eine Daten- und Leistungskommunikation zwischen der Andockstation und der Host-Vorrichtung bereitstellen soll;
einen drahtlosen Transceiver, der konfiguriert ist, um zu ermöglichen, das sich die Andockstation mit (einer) anderen drahtlosen Netzwerkvorrichtung(en) verbindet, um eine drahtlose Kommunikation über ein Netzwerk zwischen einer drahtlosen Netzwerkvorrichtung und dem Anzeigegerät zu unterstützen, um unabhängige Daten zum Betreiben des Anzeigegeräts zu empfangen, wobei die drahtlose Netzwerkvorrichtung mit einer oder mehreren Ausgabevorrichtungen assoziiert ist, wobei Daten von der Host-Vorrichtung durch die Andockstation über den Host-Vorrichtungs-Verbinder und/oder den drahtlosen Transceiver an die Ausgabevorrichtung(en) übertragen werden können; und
eine Befestigungsvorrichtung (134, 234, 334), die konfiguriert ist, um die Andockstation abnehmbar an der Andockstationsaufnahme des Anzeigegeräts zu befestigen, wobei, um das Betreiben des Anzeigegeräts zu ermöglichen, wenn die Andockstation nicht in der Andockstationsaufnahme vorhanden ist, das Anzeigegerät einen Anschluss für grafische Daten und einen zusätzlichen Leistungseinspeise-Anschluss beinhaltet, und
wobei zumindest ein Teil der Daten von der Host-Vorrichtung zu der Andockstation und von der Andockstation zu dem Anzeigegerät grafische Daten sind, die zur Wiedergabe einer Anzeige auf einem Anzeigebildschirm des Anzeigegeräts konfiguriert sind.

2. Anzeigegerät und Andockstation gemäß Anspruch 1, wobei die Befestigungsvorrichtung ein Haken ist.

3. Anzeigegerät und Andockstation gemäß Anspruch 1, ferner beinhaltend mindestens drei Befestigungsvorrichtungen, die konfiguriert sind, um die Andockstation abnehmbar an der Andockstationsaufnahme des Anzeigegeräts zu befestigen.

4. Anzeigegerät und Andockstation gemäß Anspruch 1, wobei das Anzeigegerät einen Freigabemechanismus (110, 210, 310) beinhaltet, der konfiguriert ist, um die Abnahme der Andockstation von der Aufnahme des Anzeigegeräts zu ermöglichen.

5. Anzeigegerät und Andockstation gemäß Anspruch 4, wobei der Freigabemechanismus ein Schieber ist.

## Revendications

1. Un appareil d'affichage et une station d'accueil (104, 204, 304, 404, 504, 604, 704, 804, 904, 1004), la station d'accueil étant configurée pour se fixer de façon amovible à un réceptacle de station d'accueil (106, 206, 306, 606, 706) de l'appareil d'affichage (102, 202, 302, 502, 602, 702, 802, 902, 1002), comprenant :
un connecteur de données direct (132, 232, 332, 954, 1053) configuré pour se raccorder à un connecteur de données direct (112, 212, 312, 906, 1055) de l'appareil d'affichage afin d'assurer une communication de données entre la station d'accueil et l'appareil d'affichage ;
un connecteur de sortie d'alimentation direct (130, 230, 952, 1053) configuré pour se raccorder à un connecteur d'entrée d'alimentation direct (116, 216, 908, 1055) de l'appareil d'affichage ;
un connecteur de dispositif hôte (118, 218, 318, 962, 1062) configuré pour communiquer électroniquement avec un dispositif hôte (808, 956, 1056), le connecteur de dispositif hôte servant à assurer une communication de données et d'alimentation entre la station d'accueil et le dispositif hôte ;
un émetteur-récepteur sans fil configuré pour permettre à la station d'accueil de se connecter à un autre/d'autres dispositif(s) de réseau sans fil afin de faciliter une communication sans fil sur un réseau entre un dispositif de réseau sans fil et l'appareil d'affichage de manière à recevoir des données indépendantes afin de faire fonctionner l'appareil d'affichage, où le dispositif de réseau sans fil est associé à un ou plusieurs dispositifs de sortie, où des données à destination du/des dispositif(s) de sortie peuvent être acheminées depuis le dispositif hôte à travers la station d'accueil via le connecteur de dispositif hôte et/ou l'émetteur-récepteur sans fil ; et
un dispositif de fixation (134, 234, 334) configuré pour fixer de façon amovible la station d'accueil au réceptacle de station d'accueil de l'appareil d'affichage,
où, afin de permettre à l'appareil d'affichage de fonctionner lorsque la station d'accueil n'est pas présente dans le réceptacle de station d'accueil, l'appareil d'affichage comprend un port de données graphiques et un port d'entrée d'alimentation auxiliaire, et
où au moins une portion des données en provenance du dispositif hôte à destination de la station d'accueil et en provenance de la station d'accueil à destination de l'appareil d'affichage sont des données graphiques configurées pour rendre un affichage sur un écran d'affichage de l'appareil d'affichage.

2. L'appareil d'affichage et la station d'accueil de la revendication 1, où le dispositif de fixation est un crochet.

3. L'appareil d'affichage et la station d'accueil de la revendication 1, comprenant en outre au moins trois dispositifs de fixation configurés pour fixer de façon amovible la station d'accueil au réceptacle de station d'accueil de l'appareil d'affichage.

4. L'appareil d'affichage et la station d'accueil de la revendication 1, où l'appareil d'affichage comprend un mécanisme de libération (110, 210, 310) configuré pour rendre possible le retrait de la station d'accueil hors du réceptacle de l'appareil d'affichage.

5. L'appareil d'affichage et la station d'accueil de la revendication 4, où le mécanisme de libération est un coulisseau.
